# EUROPEAN PATENT SPECIFICATION

(11) **EP 4 119 278 B1**
(45) Date of publication and mention of the grant of the patent: **07.01.2026**
(21) Application number: 21767293.0
(22) Date of filing: 08.03.2021
(51) Int. Cl.: B23K 26/00, B23K 26/046, B23K 26/04

(54) **LASER MACHINING DEVICE AND MACHINING METHOD**
LASERBEARBEITUNGSVORRICHTUNG UND BEARBEITUNGSVERFAHREN
DISPOSITIF D'USINAGE ET PROCÉDÉ D'USINAGE AU LASER

(30) Priority: 11.03.2020 JP 2020041579
(43) Date of publication of application: 18.01.2023
(73) Proprietor: Amada Co., Ltd., Isehara-shi, Kanagawa 259-1196 (JP)
(72) Inventor: MIZOGUCHI, Yuya, Isehara-shi, Kanagawa 259-1196 (JP); SHIGEFUJI, Takehiko, Isehara-shi, Kanagawa 259-1196 (JP); KAMEI, Hitomi, Isehara-shi, Kanagawa 259-1196 (JP)
(74) Representative: Grünecker Patent- und Rechtsanwälte PartG mbB
(86) International application number: PCT/JP2021/008890
(87) International publication number: WO 2021/182375

(56) References cited:
- WO-A1-2016/181695
- WO-A1-2017/159532
- DE-T5- 112017 001 389
- JP-A- 2017 164 801
- JP-A- 2018 039 028
- JP-A- H08 192 283
- US-A- 5 698 120
- US-B2- 10 664 767

## Description

### Technical Field

The present invention relates to a laser processing machine and a processing method.

### Background Art

There is known a laser processing machine provided with a device that monitors a processing region of a workpiece among laser processing machines that cut a workpiece such as a sheet metal as a material to be processed by a laser beam emitted from a laser oscillator and produce a product with a desired shape (see Patent Literature 1, for example). This monitoring device includes at least one illuminating device that illuminates the processing region of the workpiece in a laser processing head, and monitors the processing region while the illuminating device illuminates the processing region during a plurality of first time intervals, and does not illuminate the processing region during second time intervals.

Then, respective electromagnetic radiations generated from the processing region within the first time intervals and the second time intervals are detected as an image of the electromagnetic radiation of a video stream composed of first video streams and second video streams having frame rates synchronized with the first and second time intervals.

The electromagnetic radiations in the image thus detected are separately processed, so that it is possible to obtain different types of detection results indicating the processing region, and at the same time, a plurality of detection results of the same type are combined to evaluate a processing status, and a laser beam is appropriately controlled in accordance with a processing condition.

Therefore, when an image of a processing region of laser processing is acquired and monitored, as in the monitoring device described above, and a processing condition is appropriately adjusted, it is possible to realize online and/or real-time observation of a laser processing process, and it is said that automatic control and feedback control can be performed.

### Citation List

### Patent Literature

Patent Literature 1: International Publication No. WO 2019/110114

Document WO 2016/181695 A1 discloses a welding apparatus including: a laser beam irradiation section that emits a laser beam; a spectroscopic apparatus that receives plasma emission from a molten pool formed by laser beam irradiation, and acquires optical spectral information; and an estimation section that estimates material components of a weld zone on the basis of the optical spectral information, and estimates a property of the weld zone on the basis of the material components.

Document DE 11 2017 001389 T5 refers to an apparatus configured to determine the quality of an high-energy beam welding and it refers to a method for determining a quality of high-energy beam welding. The apparatus includes a molten pool shape information detection portion configured to detect shape information of a molten pool by performing image processing on an image of the molten pool that is captured by a camera, a welding optical sensor configured to detect welding optical sensor information including plasma light,
a partial regression analysis coefficient storage portion configured to store a partial regression analysis coefficient acquired by carrying out a multiple regression analysis with the weld penetration depth of the molten pool set as an objective variable and the shape information and the welding optical sensor information set as explanatory variables,
a predicted value calculation portion configured to acquire a predicted value of the weld penetration depth of the molten pool based on the molten pool shape information, the welding optical sensor information, and the partial regression analysis coefficient, and a quality determination portion configured to determine the quality of the welding by comparing the predicted value and a reference value.

From Document JP H08 192283 A it is known a laser processing machine according to the preamble portion of claim 1.

### Summary

### Technical Problem

However, in the conventional monitoring device disclosed in the above Patent Literature 1, the illuminating device is provided in the laser processing head, and the image of the electromagnetic radiation of the processing region by the illuminating device is acquired, and therefore the shape of the whole processing region can be grasped by illumination beam's illumination of a wide range of the processing region which is not irradiated with the laser beam, but as a result of irradiating the processing region with the laser beam, an image of a beam obtained by synthesizing an electromagnetic radiation that travels backward to the processing head, and a beam that results from a separate illumination beam to the processing region by the illuminating device and reflects to the processing head is acquired, so that there is a problem that a state of the beam generated in the processing region cannot be accurately determined.

The present invention has been made in view of the above circumstances, and an object of the present invention is to provide a laser processing machine and a processing method capable of controlling laser processing by accurately determining and dealing with a state of a beam generated in a processing region as a result of irradiating the processing region with the laser beam.

### Solution to Problem

A laser processing machine according to the present invention includes the features of claim 1.
Alternatively, a laser processing machine according to the present invention includes the features of claim 2.

In an embodiment of the present invention, the control device includes: a storage unit configured to store the reference values; an image processing unit configured to analyze the image information, and calculate the size of the optical image and the peak value of the light intensity; and a control unit configured to operate the laser processing unit such that the size of the optical image and the peak value of the light intensity approach the reference values stored in the storage unit.

A processing method according to present invention is a processing method with the features of claim 4 or claim 5.

According to the present invention, the processing condition is compensated such that the size of the optical image and the peak value of the light intensity approach the reference values, and operation of the laser processing unit is controlled in accordance with the compensated processing condition.

According to the present invention, the compensated processing condition includes a focus position of the laser beam and processing velocity of the laser beam relative to the workpiece.

In one embodiment of the present invention, the processing condition is compensated such that the processing velocity is increased and/or the focus position is raised, in a case where the size of the optical image is smaller than the reference value; and the processing condition is compensated such that the processing velocity is decreased and/or the focus position is lowered, in a case where the size of the optical image is larger than the reference value.

In an alternative embodiment of the present invention, the processing condition is compensated such that the processing velocity is increased and/or the focus position is lowered, in a case where the peak value of the light intensity is smaller than the reference value; and the processing condition is compensated such that the processing velocity is decreased and/or the focus position is raised, in a case where the peak value of the light intensity is larger than the reference value. The processing condition may be compensated so as to change at least one of the focus position and the processing velocity such that the size and/or the peak value observed from the image information falls within a predetermined control range including the size and/or the peak value indicating the reference value.

According to the present invention, the control device is configured to control operation of the laser processing unit such that a focus position of the laser beam and cutting velocity of the laser beam relative to the workpiece approach a preset reference condition, based on the size of the optical image and the peak value of the light intensity.

In yet another embodiment of the present invention, a learning unit including: a state observation unit configured to observe the size of the optical image and the peak value of the light intensity as state variables; and a decision-making unit that calculates a quality score from a numerical value indicating how close the focus position of the laser beam and the processing velocity of the laser beam relative to the workpiece are to the reference condition, and processing quality, learns by associating the quality score with the state variables observed by the state observation unit, and determines the processing condition is further included.

In yet another embodiment of the present invention, processing is performed by controlling, by the control device, the operation of the laser processing unit such that a focus position of the laser beam and cutting velocity of the laser beam relative to the workpiece approach a preset reference condition, based on the size of the optical image and the peak value of the light intensity.

In yet another embodiment of the present invention, the size of the optical image and the peak value of the light intensity are observed as state variables; and a quality score is calculated from a numerical value indicating how close the focus position of the laser beam and the processing velocity of the laser beam relative to the workpiece are to the reference condition, and processing quality, learning is performed by associating the quality score with the observed state variables, and the processing condition is determined.

In yet another embodiment of the present invention, a display unit configured to display the calculated quality score; and a correction unit configured to correct the focus position of the laser beam and the processing velocity of the laser beam relative to the workpiece that become the reference condition are further included.

### Advantageous Effect of Invention

According to the present invention, it is possible to control laser processing by accurately determining and dealing with a state of a beam generated in a processing region as a result of irradiating the processing region with the laser beam.

### Brief Description of Drawings

[Figure 1] Figure 1 is an explanatory diagram illustrating a schematic configuration of a laser processing machine according to an embodiment of the present invention.
[Figure 2] Figure 2 is a block diagram schematically illustrating a functional configuration of the laser processing machine.
[Figure 3] Figure 3 is a diagram for illustrating an example of parameters of an optical image observed from image information obtained by imaging a workpiece by the laser processing machine.
[Figure 4] Figure 4 is a diagram for illustrating an example of relation between an optical image, and a focus position and processing velocity (cutting velocity) of a laser beam under a processing condition of the laser processing by the laser processing machine.
[Figure 5] Figure 5 is a graph illustrating relation between the processing velocity of the laser processing by the laser processing machine and the magnification of the size of the optical image with respect to a reference value.
[Figure 6] Figure 6 is a graph illustrating relation between the processing velocity of the laser processing by the laser processing machine and the magnification of a peak value of the light intensity of the optical image with respect to a reference value.
[Figure 7] Figure 7 is a graph illustrating relation between the processing velocity and the dross height of the laser processing machine.
[Figure 8] Figure 8 is a graph illustrating relation between the focus position of a laser beam and the size of the optical image in the laser processing machine.
[Figure 9] Figure 9 is a graph illustrating relation between the focus position of the laser beam and the peak value of the light intensity in the laser processing machine.
[Figure 10] Figure 10 is a graph illustrating relation between the focus position of the laser beam and the dross height in the laser processing machine.
[Figure 11] Figure 11 is a graph illustrating relation among the size of the optical image, the peak value of the light intensity, and the quality result in the laser processing by the laser processing machine.
[Figure 12] Figure 12 is a graph illustrating relation among the size of the optical image, the peak value of the light intensity, and the quality result in the laser processing by the laser processing machine.
[Figure 13] Figure 13 is a graph illustrating relation among the size of the optical image, the peak value of the light intensity, and the quality result in the laser processing by the laser processing machine.
[Figure 14] Figure 14 is a graph illustrating relation between the thickness of the workpiece and the focus position of the laser beam in an initial processing condition of the laser processing by the laser processing machine.
[Figure 15] Figure 15 is a graph illustrating relation between the thickness of the workpiece and the ratio of the focus position of the laser beam from a thickness center in the initial processing condition of the laser processing by the laser processing machine.
[Figure 16] Figure 16 is a table and a graph for schematically illustrating a control range set by relation among the size of the optical image, the peak value of the light intensity, and the quality result in the laser processing by the laser processing machine.
[Figure 17] Figure 17 is a table and a graph illustrating a content obtained by applying data in Figure 11 to the table and the graph in Figure 16.
[Figure 18] Figure 18 is a flowchart illustrating an example of a flow of the laser processing by the laser processing machine.
[Figure 19] Figure 19 is a diagram for illustrating an example of relation between the optical image, and the focus position and the processing velocity (cutting velocity) of the laser beam for explaining machine learning by the laser processing machine.
[Figure 20] Figure 20 is a diagram for illustrating an example of a parameter of a fifth optical image in Figure 19.
[Figure 21] Figure 21 is a diagram for illustrating an example of parameters of a first optical image in Figure 19.
[Figure 22] Figure 22 is a diagram for illustrating an example of parameters of a sixth optical image in Figure 19.
[Figure 23] Figure 23 is a diagram for illustrating an example of parameters of a seventh optical image in Figure 19.
[Figure 24] Figure 24 is a diagram for illustrating an example of parameters of a fourth optical image in Figure 19.
[Figure 25] Figure 25 is a block diagram for schematically illustrating a functional configuration of a laser processing machine according to another embodiment of the present invention.

### Description of Embodiment

Hereinafter, a laser processing machine and a processing method according to an embodiment of the present invention will be described in detail with reference to the attached drawings. However, the following embodiments do not limit the invention according to each claim, and not all combinations of features described in the embodiments are essential for the means for solving the invention.

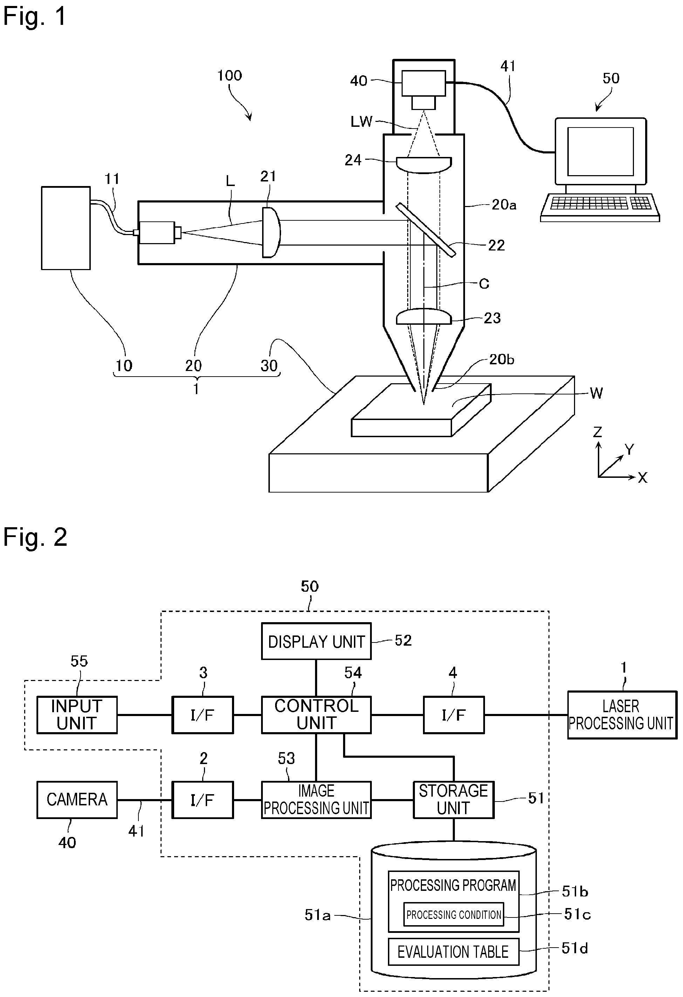

Figure 1 is an explanatory diagram illustrating a schematic configuration of a laser processing machine 100 according to an embodiment of the present invention, and Figure 2 is a block diagram schematically illustrating a functional configuration of the laser processing machine 100. Since a basic structure of the laser processing machine 100 including a laser processing unit 1 is known, only an outline thereof will be described herein except for a part requiring explanation.

Further, in the following description, the "X-axis direction" means the left-right direction when facing a front surface of a processing table 30 of the laser processing unit 1 in the laser processing machine 100, the "Y-axis direction" means the depth direction in this case, and the "Z-axis direction" means the vertical direction in this case. Further, in this embodiment, the scale and the dimensions of each component may be exaggerated or some components may be omitted.

As illustrated in Figure 1, the laser processing machine 100 is a processing machine that processes a workpiece (material) W by a laser beam L (laser cutting). As the workpiece W to be processed, for example, a sheet metal is used. The laser processing machine 100 includes the laser processing unit 1 including a laser oscillator 10, a laser processing head 20, and the processing table 30 on which the workpiece W is placed, and a camera 40 as an imaging device that images the workpiece W irradiated with the laser beam L.

Further, the laser processing machine 100 includes an NC device 50 that controls the laser processing unit 1 in accordance with a processing condition for processing the workpiece W, and an assist gas supply device (not illustrated) that supplies assist gas. Specifically, the NC device 50 functions as an NC device of the laser processing machine 100. The processing condition is preset in the NC device 50 in accordance with the material and the thickness of the workpiece W.

The laser processing unit 1 is a unit for actually processing the workpiece W by using the laser beam L. The laser oscillator 10 and the laser processing head 20 of the laser processing unit 1 are connected via a process fiber 11.

The laser oscillator 10 generates the laser beam L and emits the laser beam L. As the type of the laser oscillator 10, for example, a type in which a seed beam emitted from a laser diode excites and amplifies Yb or the like with a resonator, and a laser beam L having a predetermined wavelength is emitted, or a type in which a laser beam L emitted from a laser diode is directly utilized is preferably used.

Examples of the laser oscillator 10 as a solid laser oscillator include a fiber laser oscillator, a YAG laser oscillator, a disk laser oscillator, and a DDL oscillator.

The laser oscillator 10 of this embodiment emits a laser beam L in a 1 µm band having a wavelength of 1 µm band of 900 nm to 1100 nm. For example, the DDL oscillator emits a laser beam L having a wavelength of 910 nm to 950 nm, and the fiber laser oscillator emits a laser beam L having a wavelength of 1060 nm to 1080 nm. Further, a blue semiconductor laser emits a laser beam having a wavelength of 400 nm to 460 nm. A green laser may be a fiber laser oscillator or a DDL oscillator that emits a laser beam having a wavelength of 500 nm to 540 nm, or may be a multi-wavelength resonator in which a laser beam L in the 1 µm band and a beam are combined. The process fiber 11 delivers the laser beam L emitted by the laser oscillator 10 to the laser processing head 20 of the laser processing unit 1.

The laser processing head 20 irradiates the workpiece W on the processing table 30 with the laser beam L delivered by the process fiber 11. The laser processing head 20 includes a cylindrical housing 20a including an irradiation central axis C of the laser beam L. The laser processing head 20 includes a collimator lens 21 which allows the laser beam L emitted from an emission end of the process fiber 11 to be incident inside the housing 20a, and a bend mirror 22 that reflects the laser beam L emitted from the collimator lens 21 downward in the vertical Z-axis direction perpendicular to the X-axis and the Y-axis. The bend mirror 22 is coated with a coating that reflects only a part of the wavelength (1080 nm, 650 nm) of the laser beam L, for example. Further, the laser processing head 20 includes a condensing lens 23 for processing that focuses the laser beam L reflected by the bend mirror 22.

The housing 20a is formed so as to have a tapered shape on the tip end side of the laser processing head 20. At the tip end portion of the laser processing head 20, a nozzle 20b with a circular opening for irradiating the workpiece W with the laser beam L is provided. This nozzle 20b has a nozzle function for directing a high-pressure gas flow supplied from the assist gas supply device toward the workpiece W coaxially with the laser beam L in order to remove the molten workpiece W, and is provided detachably.

The laser processing unit 1 includes the laser processing head 20 thus configured on the processing table 30 connected via a carriage (not illustrated). The carriage supports the laser processing head 20 movably with respect to the processing table 30 in the X-axis direction, the Y-axis direction, and the Z-axis direction.

In the laser processing unit 1 thus configured, for example, cutting and penetrating (piercing) of the workpiece W are performed using the laser beam L delivered by the process fiber 11.

A beam LW (Light from Work) from the workpiece W includes various beams such as a reflected beam of the laser beam L and a plasma beam generated from the workpiece W. When a through hole is formed in the workpiece W by the laser beam L, the reflected beam from the workpiece W is reduced. An optical image OI (Optical Image) generated in a processing region of the workpiece W by these beams LW passes through the condensing lens 23 for processing and the bend mirror 22, is collected by a condensing lens 24 for imaging, and is imaged by the camera 40.

The camera 40 is configured to be able to acquire, for example, a stream (image information) of a spatially decomposed captured image. The camera 40 may be composed of a color camera, a monochromatic camera, a high-speed camera, or the like. The stream of the image imaged by the camera 40 is input to the NC device 50 connected via the data link (cable) 41.

The NC device 50 controls operation of the laser processing unit 1 such that parameters representing the optical image OI imaged by the camera 40, for example, detection values such as the size OIS (OI Size) of the optical image OI and the peak value PV (Peak Value) of the light intensity LI (Light Intensity) of the optical image OI approach reference values preset in the NC device 50.

As illustrated in Figure 2, the NC device 50 functionally includes an image processing unit 53, a control unit 54, a display unit 52, an input unit 55, and a storage unit 51. The image processing unit 53 analyzes image information of the optical image OI input from the camera 40 via a cable 41 and a video interface (I/F) 2, and calculates the detection values of the parameters such as the size OIS of the optical image OI (hereinafter, referred to as "size OIS" unless otherwise specified.) and the peak value PV of the light intensity LI of the optical image OI (hereinafter, referred to as a "peak value PV" unless otherwise specified).

The control unit 54 operates the laser processing unit 1 such that the detection value calculated by the image processing unit 53 approaches the reference values stored in the storage unit 51. Further, the control unit 54 may control operation of the laser processing unit 1, for example, such that the focus position Fp (Focal point) of the laser beam L and the cutting velocity Fr (Feed rate) of the laser beam L relative to the workpiece W approach a focus position Fp and cutting velocity Fr in a preset reference condition, based on the size OIS of the optical image OI and the peak value PV of the light intensity LI included in the detection values. Furthermore, the display unit 52 displays various screens such as a setting input screen for inputting a processing condition and the like. The input unit 55 includes an input device such as a keyboard and a mouse.

The storage unit 51 includes a storage medium such as a RAM, a ROM, an HDD, and an SSD, and is connected to a database 51a that stores various information in association with each other. Further, for example, the storage unit 51 associates the information regarding a determination result of processing quality by the control unit 54 and information regarding the optical image OI with a set processing condition 51c and the calculated detection values of the parameters of the optical image OI, and stores the associated information in, for example, the database 51a.

In the database 51a, for example, a processing program 51b in which the processing condition 51c such as the focus position Fp of the laser beam L and the cutting velocity (processing velocity) Fr are recorded is stored. Further, in the database 51a, an evaluation table 51d corresponding to the processing condition 51c, which is obtained by processing under an initial processing condition in advance, is recorded. The evaluation table 51d includes reference values such as the size OIS and the peak value PV.

That is, the control unit 54 refers to the evaluation table 51d, so that when the operation of the laser processing unit 1 is controlled, it is possible to immediately calculate, for example, how much the size OIS and the peak value PV acquired in real time are different from the reference values of the size OIS and the peak value PV included in the evaluation table 51d. Then, the control of the operation of the laser processing unit 1 (for example, feedback control) is performed such that the focus position Fp and the cutting velocity Fr of the laser beam L from the laser processing head 20 in the laser processing performed based on the calculation result, for example, the detection values of the parameters match the reference values (approach the reference values).

The display unit 52 may be composed of a touch panel having a function of the input unit 55. In a case where the display unit 52 is thus composed of the touch panel, a user can input various information as described above to the NC device 50 in addition to the material and the thickness of the workpiece W, for example, by operating the display unit 52. Further, the user can visually grasp the information related to the laser processing such as the processing condition 51c from the various information displayed on the display unit 52.

The image processing unit 53 may be composed of a graphic controller, a buffer memory such as VRAM, a display control IC, or the like, but in this example, the image processing unit 53 is composed of an image processing device including at least a GPU. The control unit 54 is composed of an arithmetic processing device including a CPU. The image processing unit 53 and the control unit 54 may be configured by a function-integrated arithmetic processing device.

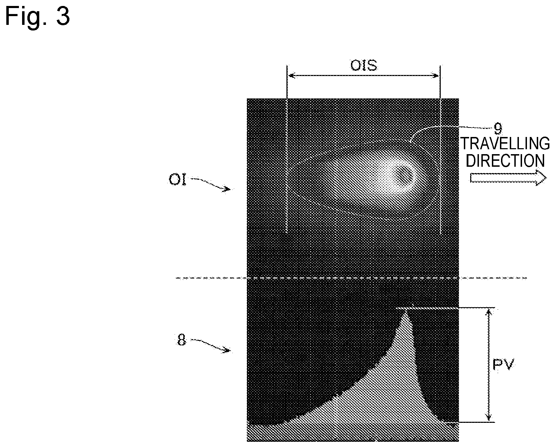

Figure 3 is a diagram for illustrating an example of parameters of the optical image OI observed (detected) from the image information obtained by imaging the workpiece W with the camera 40. As illustrated in the figure, the image processing unit 53 performs a process such as real-time analysis of the optical image OI including the laser beam L and a plasma beam imaged by the camera 40, for example. As the parameter representing the optical image OI and detected by the analysis with the image processing unit 53 or the like, for example, the size OIS of the optical image OI representing the length of an optical image region 9 in the traveling direction of the laser beam L is detected from the optical image OI imaged with the camera 40. This size OIS is obtained, for example, by detecting the outline of the optical image OI and thereafter detecting the length of the outline in the traveling direction of the laser beam L. Further, the size OIS may be obtained by dividing the image information into a multi-step light intensity distribution with the level of the light intensity LI of the image around the optical image region 9 as a threshold level, and observing the length in the traveling direction of the optical image OI of the obtained light intensity distribution image.

For example, from an analysis image 8 obtained by analyzing the light intensity LI in the direction perpendicular to the traveling direction of the optical image OI, the peak value PV of the light intensity LI of the optical image OI is detected as a parameter. These detection values of the size OIS and the peak value PV are input to the control unit 54 and stored in the storage unit 51, and are used to control the operation of the laser processing unit 1. Detailed description of the control of the operation of the laser processing unit 1 using the size OIS and the peak value PV will be described later.

The control unit 54 sets the processing condition 51c for processing by the laser processing unit 1 (laser processing) based on, for example, input information input by the user, via the input unit 55 and an input interface (I/F) 3. In addition, the control unit 54 outputs a control signal to the laser processing unit 1 via an output interface (I/F) 4 to control the operation of the laser processing unit 1.

Specifically, at the time of the laser processing, the control unit 54 reads the processing program 51b from the storage unit 51 and reads a reference value set (substituted) in the evaluation table 51d for each material and each thickness of the workpiece W to be processed and the processing condition 51c described in the processing program 51b. In addition, the control unit 54 acquires and refers to the detection values of the size OIS and the peak value PV analyzed by the image processing unit 53.

Then, the control unit 54 controls the operation of the laser processing unit 1 (the laser oscillator 10 and the laser processing head 20) based on these read processing program 51b, reference values, and processing condition 51c. Consequently, in the laser processing unit 1, laser processing according to the processing condition 51c is performed on the workpiece W.

As described above, the database 51a stores the reference values and the processing condition 51c when the workpiece W is cut. The processing conditions 51c includes information such as laser output of the laser oscillator 10, a pulse condition such as the frequency and the duty ratio of the laser beam L, the diameter of the nozzle 20b of the laser processing head 20, the focal length of the condensing lens 23 for processing, and the type and pressure of assist gas in addition to information such as the focus position Fp and the cutting velocity (processing velocity) Fr of the laser beam L when the workpiece W is cut by the laser beam L. The focus position Fp of the laser beam L is a position of a processing focal point, which is a distance between a top surface (front surface) of the workpiece W and the focus position Fp in the Z-axis direction (vertical direction (thickness direction of the workpiece W)).

The I/Fs 2 to 4 may be composed of an integrated I/F having a communication function and integrated into one. In this case, a configuration in which predetermined data generated by an external computer or the like is input/output to/from the NC device 50 by communication via the integrated I/F may be adopted. The storage unit 51 can accumulate (store), for example, a determination result of the quality of the laser processing, which will be described later, and the image information of the optical image OI obtained by imaging the workpiece W with the camera 40 in association with the reference values, the set processing condition 51c, and the above parameters, in the database 51a.

As described above, the laser processing head 20 is fixed to a carriage that can move in the Y-axis direction on the processing table 30, and this carriage is provided on a carriage that can move in the X-axis direction. Therefore, the laser processing head 20 is configured to be able to move the processing position for irradiating the workpiece W with the laser beam L in the X-axis direction and the Y-axis direction along a plate surface of the workpiece

### W.

As the laser processing machine 100, instead of the configuration in which the above laser processing head 20 is moved along the plate surface of the workpiece W, the workpiece W may be moved in the X-axis direction and the Y-axis direction in a state in which the position of the laser processing head 20 is fixed. That is, the laser processing machine 100 may have a configuration in which the laser processing head 20 is relatively moved with respect to the surface of the workpiece W. When the laser processing machine 100 thus configured is used, the workpiece W on the processing table 30 is cut, penetrated (drilled, pierced), quenched, welded, or the like by the laser beam L emitted by the laser oscillator 10, so that it is possible to manufacture a product having a predetermined shape, a predetermined pattern, or the like.

The assist gas supply device (not illustrated) adjusts the type, pressure, flow rate, or the like of the assist gas and supplies the adjusted assist gas to the laser processing head 20. Examples of the assist gas include oxygen, nitrogen, mixed gas of oxygen and nitrogen, air, and the like. The assist gas is blown from an opening of the nozzle 20b to the workpiece W during the laser processing. The blown assist gas discharges molten metal in the kerf width where the workpiece W is melted.

Now, the operation of the laser processing machine 100 will be described.

In the laser processing machine 100 thus configured, for example, in laser processing in which stainless steel (SUS304) having a thickness of 10 mm is used as the workpiece W, output of the laser beam L by the laser oscillator 10 is set to 9 kW, and nitrogen is used as the assist gas, for example, the processing condition 51c is set such that the optimum processing is realized when the focus position Fp of the laser beam L is -4 and the processing velocity Fr is F4500 (this is called a "reference condition 60"). Further, the processing condition 51c is set such that a range in which the focus position Fp and the processing velocity Fr are within a predetermined range with the reference condition 60 as a center is a control range 61.

The reason why this range is set to the control range 61 is that stability that cutting failure does not occur even when the focus position Fp deviates to some extent, and the processing velocity Fr at which productivity does not decrease extremely are secured. A relation profile between the focus position Fp and the processing velocity (cutting velocity) Fr of the optical image OI imaged by the camera 40 each time when laser processing is performed while changing the focus position Fp and the processing velocity (cutting velocity) Fr after fixing various other conditions (such as a duty ratio of the laser beam L and the gas pressure) in the processing condition 51c is as follows, for example.

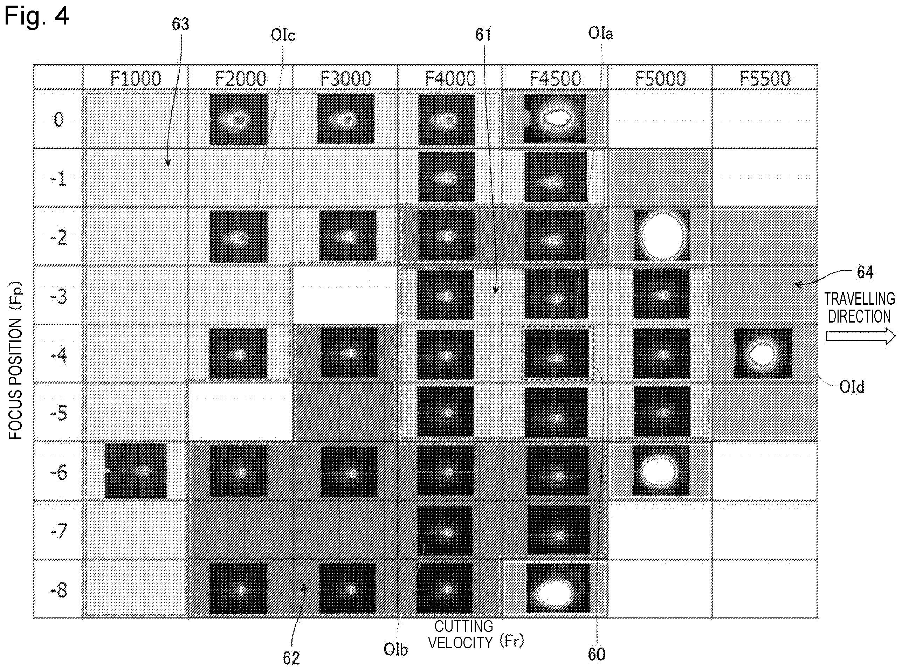

Figure 4 is a diagram for illustrating an example of relation between the optical image OI, and the focus position Fp and the processing velocity (cutting velocity) Fr of a laser beam L under the processing condition 51c of the laser processing by the laser processing machine 100, which is analyzed by the image processing unit 53. The vertical axis in this figure represents the focus position Fp of the laser beam L, and the horizontal axis represents the cutting velocity Fr in the laser processing. In addition, the direction from the left side to the right side facing the figure is the traveling direction of the laser beam L.

Figure 4 indicates an example of the relation between the optical image OI, the focus position Fp, and the cutting velocity Fr by laser processing under the above processing condition 51c. Figure 4 illustrates respective ranges illustrated by a one-dot chain line, a two-dot chain line, a fine dotted line, and a coarse dotted line, respectively, are the same range (region).

In Figure 4, the control range 61 including a first optical image Ola imaged by the camera 40 under the reference condition 60 is a range including a combination of the focus position Fp and the cutting velocity Fr in a case where laser processing is performed satisfactorily with almost no occurrence of dross in the workpiece W.
In addition, a second range 62 including a second optical image Olb is a range including a combination of the focus position Fp and the cutting velocity Fr in a case where laser processing is performed to some extent well although dross occurs slightly in the workpiece W compared to that in the control range 61.

Furthermore, a third range 63 including a third optical image Olc is a range including a combination of the focus position Fp and the cutting velocity Fr in a case where cutting is possible but occurrence of dross is recognized, and a fourth range 64 including a fourth optical image Old is a range including a combination of the focus position Fp and the cutting velocity Fr in a case where cutting failure (gouging) is recognized. The dross refers to a deposit of metal, oxide, or the like molten and adhered to a bottom surface of a cut material, and is synonymous with slag. When the presence or absence of the occurrence of dross is determined, an allowable value of the dross height Dh (Dross height) from the plate surface of the workpiece W for determining the presence or absence of the occurrence of dross may be set to, for example, 10% or less or 5% or less of the thickness of the workpiece W. The gouging in laser cutting refers to a state in which, for example, the laser beam L does not penetrate in the course of laser cutting and molten metal is ejected onto the material surface (workpiece surface), and results in a dirty appearance.

Specifically, as illustrated in Figure 4, the control range 61 includes a combination in which the focus position Fp of the laser beam L is -3 to -5, and a combination in which the cutting velocity Fr is F4000 (4000 mm/min, the same applies hereinafter.) to F5000 (5000 mm/min, the same applies hereinafter.), and is illustrated in a rectangular shape. When the operation of the laser processing unit 1 is controlled such that the focus position Fp and the processing velocity Fr fall within this control range 61, more preferably approach the reference values, it is possible to perform the laser processing maintaining desired quality. The second range 62 includes a combination in which the focus position Fp is -2 and the cutting velocity Fr is F4000 and F4500 (4500 mm/min, the same applies hereinafter.), a combination in which the focus position Fp is -4 and -5 and the cutting velocity Fr is F3000 (3000 mm/min, the same applies hereinafter.), a combination in which the focus position Fp is -6 and -7 and the cutting velocity Fr is F2000 (2000 mm/min, the same applies hereinafter.) to F4500, and a combination in which the focus position Fp is -8 and the cutting velocity Fr is F2000 to F4000.

The third range 63 includes a combination in which the focus position Fp is 0 and the cutting velocity Fr is F1000 (1000 mm/min, the same applies hereinafter.) to F4000, a combination in which the focus position Fp is -1 and the cutting velocity Fr is F1000 to F4500, a combination in which the focus position Fp is -2 and the cutting velocity Fr is F1000 to F3000, a combination in which the focus position Fp is -3 and -4 and the cutting velocity Fr is F1000 to F2000, and a combination in which the focus position Fp is -5 to -8 and the cutting velocity Fr is F1000.

Furthermore, the fourth range 64 includes a case in which the focus position Fp is 0 and the cutting velocity Fr is F4500, a combination in which the focus position Fp is -1 and -2 and the cutting velocity Fr is F5000, a combination in which the focus position Fp is -2 to -5 and the cutting velocity Fr is F5500 (5500 mm/min, the same applies hereinafter.), a case in which the focus position Fp is -6 and the cutting velocity Fr is F5000, and a case in which the focus position Fp is -8 and the cutting velocity Fr is F4500.

From the above, according to the findings of the present applicant, from the relation profile of the optical image OI indicated by the focus position Fp and the processing velocity Fr included in each of the ranges 61 to 64, it is clear that the size OIS and the peak value PV of the light intensity LI of the optical image OI (first optical image Ola) in the reference condition 60 (when the focus position Fp is -4 and the cutting velocity Fr is F4500) representing a frame in the central portion of the control range 61 can be the reference values stored in the evaluation table 51d. Therefore, when the control range 61 including the reference condition 60 is set as the processing condition 51c in advance according to the material and the thickness of the workpiece W, it is possible to increase a possibility that an appropriate processing operation can be realized at the initial operation. Then, after the processing operation is started, the operation (the focus position Fp and the processing velocity Fr) of the laser processing unit 1 only needs to be controlled such that the actually observed optical image OI approaches the reference value. Herein, as a consideration regarding the reference values, a case focusing on the processing velocity Fr will be described.

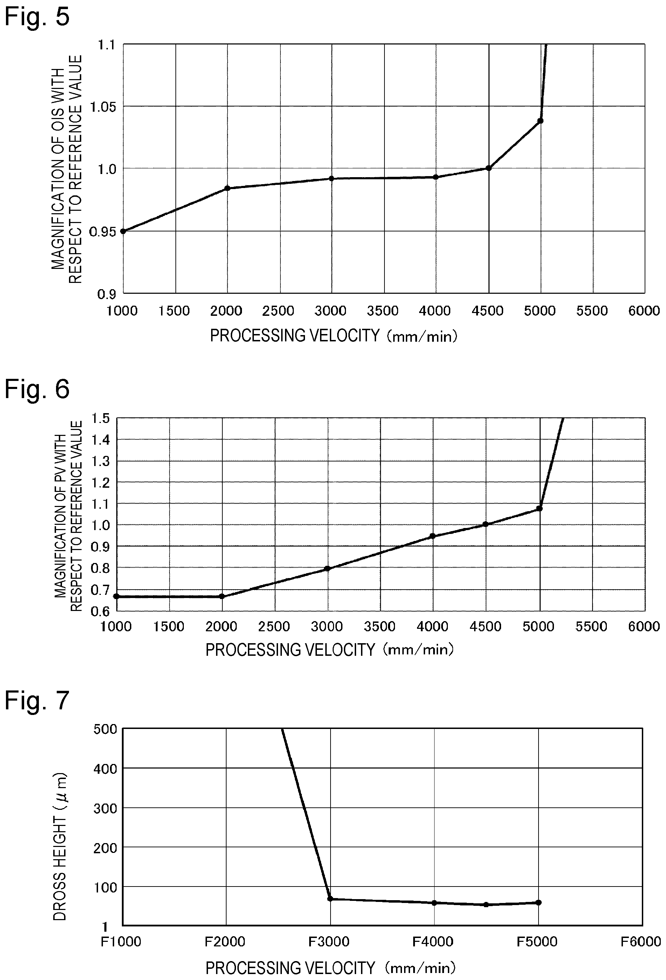

Figure 5 illustrates relation between the processing velocity Fr of the laser processing by the laser processing machine 100 and the magnification of the size OIS of the optical image OI with respect to the reference value, based on the relation illustrated in Figure 4. The vertical axis in this figure represents the magnification of the size OIS with respect to the reference value, and the horizontal axis represents the processing velocity Fr. From Figure 5, it is possible to grasp a tendency that the size OIS in the traveling direction increases (from about 0.98 times to about 1.04 times) as the processing velocity Fr generally increases (for example, increases from F2000 to F5000). In a case where the processing velocity Fr is too fast and cutting failure occurs (for example, in a case where the processing velocity Fr is faster than F5000), the size OIS is further increased. When referring to Figure 4, this is clear, for example, from the fact that gouging occurs similarly when the cutting velocity Fr is F5000 and the focus position Fp is in the range of -1 to -2 and -6. That is, in the case of these gouging, a cut slit does not penetrate and the cutting front disappears, and all the laser beam L radiated with the blow of the assist gas is diffusely reflected in a molten pool of the workpiece W (cutting failure occurs, so that the reflected beam of the laser beam L is rapidly increased). Therefore, as illustrated in Figure 5, the magnification of the size OIS rapidly increases (enlarged).

Figure 6 illustrates relation between the processing velocity Fr of the laser processing by the laser processing machine 100 and the magnification of the peak value PV of the light intensity LI of the optical image OI with respect to the reference value, based on the relation illustrated in Figure 4. The vertical axis in this figure represents the magnification of the peak value PV with respect to the reference value, and the horizontal axis represents the processing velocity Fr. From Figure 6, it is possible to grasp a tendency that the peak value PV increases (from about 0.69 times to about 1.09 times) as the processing velocity Fr generally increases (for example, increases from F2000 to F5000). When the processing velocity Fr is too fast and cutting failure occurs (for example, when the processing velocity Fr is faster than F5000), the peak value PV is further increased. When referring to Figure 4, for example, when the cutting velocity Fr is F5000 and the focus position Fp is in the range of -1 to -2 and -6, gouging occurs as described above, and therefore it is clear from the fact that the peak value PV becomes high. Due to the occurrence of gouging, the peak value PV tends to be significantly increased when the cutting velocity Fr is F5000 or more as compared with the displacement situation in which the cutting velocity Fr is from F2000 to F5000. Further, it can be confirmed that the slope of the cutting velocity Fr is substantially linear in the range of F2000 to F4000, and the slope of the range of F4000 to F5000 is displaced to a slightly smaller slope. As described above, in Figure 6, the reflected beam of the laser beam L rapidly increases due to the occurrence of cutting failure, and the magnification of the peak value PV rapidly increases (enlarged), similar to the magnification of the size OIS illustrated in Figure 5.

Figure 7 illustrates relation between the processing velocity Fr (mm/min) and the dross height Dh (µm) in the laser processing machine 100, based on the relation illustrated in Figure 4. The vertical axis in this figure represents the dross height Dh, and the horizontal axis represents the processing velocity Fr. From Figure 7, in the range of approximate predetermined processing velocity Fr (for example, the range of F3000 to F5000), it is possible to grasp a tendency that the dross height Dh is very low (for example, less than 100µm) and cutting is good. Further, it can be seen that the dross height Dh becomes very high (for example, 500 µm or more) from a low speed to a certain processing velocity Fr (for example, F3000). Furthermore, it can be confirmed that the processing velocity Fr in the range from F3000 to F4500 is substantially linear, and indicates a tendency different from the range from F4500 to F5000. In the case of a high speed (for example, F5000 or more), cutting was not established due to the occurrence of gouging, and the dross height Dh could not be measured.

From the above, for example, for the workpiece W of SUS304 with a thickness of 10 mm, at the time of cutting using -3 to -5 as the focus position Fp, when the operation of the laser processing unit 1 is controlled such that cutting is performed under a combination of F4000 to F5000 (the processing velocity Fr which satisfies the above control range 61) as the processing velocity Fr, it is possible to obtain a desired cutting result. Furthermore, it is determined that more optimum cutting result is obtained when the operation is controlled such that the processing velocity Fr is F4500 (processing velocity Fr under the reference condition 60). From this point of view, for example, even when the recommended processing velocity Fr for a user of the laser processing machine 100 (that is, the processing velocity Fr under the reference condition 60) is determined to be F4500 and the processing velocity Fr changes to some extent within the control range 61, it is possible to apply various good laser processing. When such a content is regarded as a generalized tendency, it can be seen that, for example, the processing velocity (cutting velocity) Fr by the laser processing head 20 and the size OIS of the optical image OI have certain proportional relation. Further, for example, it can be seen that the cutting velocity Fr of the laser processing head 20 and the peak value PV of the light intensity LI of the optical image OI also have certain proportional relation. Therefore, when the processing velocity Fr of the laser processing unit 1 is controlled within, for example, the control range 61 such that the size OIS and the peak value PV detected from image information obtained by imaging the workpiece W with the camera 40 approach the reference values based on the size OIS and the peak value PV under the reference condition 60, it is possible to perform desired laser processing with a quality close to the best without occurrence of cutting failure.

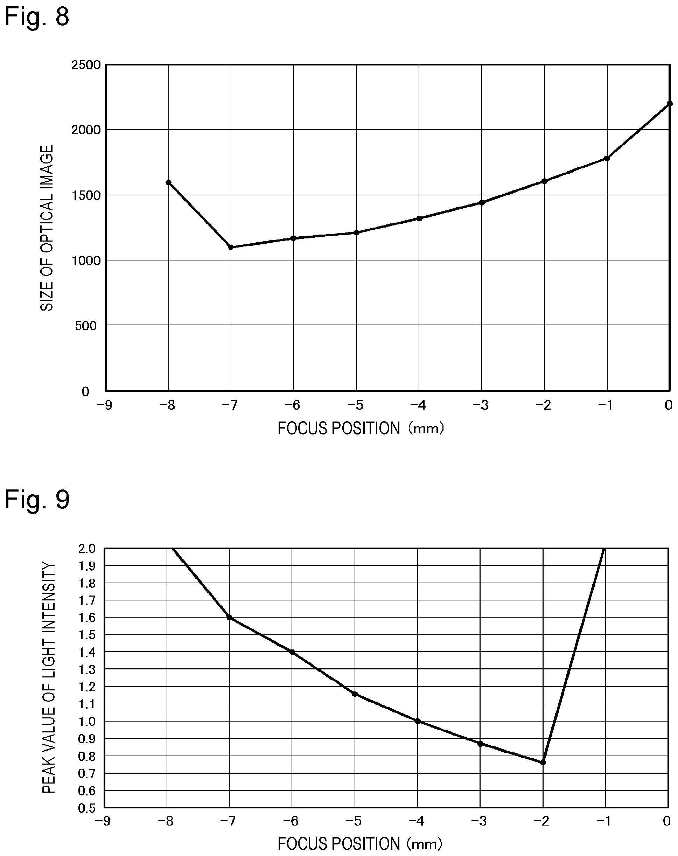

On the other hand, as another consideration regarding the reference value different from the case of focusing on the processing velocity Fr as described above, the case of focusing on the focus position Fp will be described. Figure 8 illustrates relation between the focus position Fp of the laser beam L and the size OIS of the optical image OI in the laser processing machine 100, based on the relation illustrated in Figure 4. From Figure 8, it is possible to grasp a tendency that the size OIS becomes smaller (from about 1.35 times to about 0.83 times) when the focus position Fp is generally lowered (for example, from -1 to -7). In a case where the focus position Fp is lowered from -7 to -8, the size OIS is increased from about 0.8 times to about 1.2 times, which is different from this tendency. When referring to Figure 4, for example, this is clear from the fact that gouging occurs when the processing velocity Fr is F4500 and the focus position Fp is -8. That is, in this case, a cut slit does not penetrate and the cutting front disappears, and all the laser beam L radiated with the blow of the assist gas is diffusely reflected in a molten pool of the workpiece W, so that the size OIS suddenly increases. Similarly, when the focus position Fp is raised from -1 to 0, it is clear that gouging occurs, and it is indicated that the size OIS is increased sharply.

Figure 9 illustrates relation between the focus position Fp of the laser beam L and the peak value PV of the light intensity LI of the optical image OI by the laser processing machine 100, based on the relation illustrated in Figure 4. From Figure 9, it is possible to grasp a tendency that the peak value PV becomes higher (from about 0.76 times to about 1.6 times) when the focus position Fp is generally lowered (for example, from -2 to -7). In a case where the focus position Fp is raised from -2 to -1, the peak value PV becomes higher from about 0.76 times to about 2.0 times, which is different from this tendency. When referring to Figure 4, for example, this is clear from the fact that the dross height Dh is high when the processing velocity Fr is F4500 and the focus position Fp is -1. That is, in this case, it is indicated that the peak value PV becomes high depending on the degree of dross. Also when the focus position Fp is raised from -1 to 0, gouging occurs similarly, and therefore the peak value PV tends to be higher compared to the displacement situation in which the focus position Fp is from -2 to -7. In addition, a substantially linear slope can be confirmed in the range of the focus position Fp from -2 to -5, and it can be confirmed that the slope in the range of -5 to -7 is displaced to a slightly larger slope.

When the focus position Fp is high, for example, when the focus position Fp is 0, a melting state on the top surface (front surface) side of the workpiece W becomes good, but the power density on the bottom surface (back surface) side of the workpiece W decreases, and therefore the melting state cannot be kept good. In this case, gouging in which the cutting front is not formed occurs through the dross failure. On the contrary, when the focus position Fp is low, for example, when the focus position Fp is -8, the power density on the top surface side of the workpiece W decreases, and therefore the melting state cannot be kept good. In this case, since the cutting front is not formed suddenly, gouging also occurs.

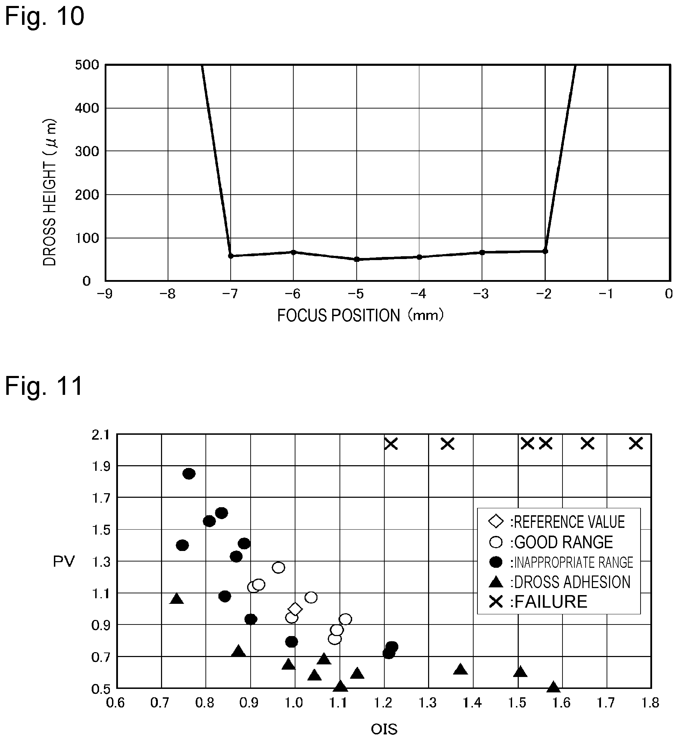

Figure 10 illustrates relation between the focus position Fp (mm) of the laser beam L and the dross height Dh (µm) in the laser processing machine 100, based on the relation illustrated in Figure 4. The vertical axis in this figure represents the dross height Dh, and the horizontal axis represents the focus position Fp. From Figure 10, in the range of an approximate predetermined focus position Fp (for example, a range of -2 to -7), it is possible to grasp a tendency that the dross height Dh is very low (for example, less than 100µm) and cutting is good. Further, it can be seen that the dross height Dh becomes very high (for example, 500 µm or more) in the range of the focus position Fp other than the above approximate predetermined focus position Fp (for example, extremely shallow or deep focus position, (for example, a focus position of -1 or -8)). Furthermore, it can be confirmed that the focus position Fp in the range from -3 to - 5 is substantially linear, and indicates a tendency different from the focus position Fp in the range of -2 to -3 or the focus position Fp in the range of -5 to -7.

From the above, for example, for the workpiece W of SUS304 with a thickness of 10 mm, at the time of cutting using F4500 as the processing velocity Fr, when the operation of the laser processing unit 1 is controlled such that cutting is performed under a combination of -2 to -7 as the focus position Fp, it is determined that the dross height Dh falls within an allowable range. Further, when cutting is performed under a combination of -3 to -5 as the focus position Fp, (the focus position Fp which satisfies the above control range 61), it is determined that a better cutting result can be obtained, and when cutting is performed using -4 of the focus position Fp (focus position Fp under the reference condition 60), it is determined that the best (optimum) cutting result can be obtained.
From this point of view, for example, even when the recommended focus position Fp for a user of the laser processing machine 100 (that is, the focus position Fp under the reference condition 60) is determined to be -4 and the focus position Fp changes to some extent within the control range 61, it is possible to apply good laser processing. When such a content is regarded as a generalized tendency, it can be seen that, for example, the focus position Fp by the laser processing head 20 and the size OIS of the optical image OI have proportional relation to some extent, but the focus position Fp of the laser processing head 20 and the peak value PV of the light intensity LI of the optical image OI have inverse proportional relation to some extent.

Therefore, in the control unit 54, when the focus position Fp of the laser processing unit 1 is controlled, for example, within the control range 61 such that the size OIS and the peak value PV detected from the image information obtained by imaging the workpiece W with the camera 40 based on the size OIS and the peak value PV under the reference condition 60 approach the reference values, it is possible to perform desired laser processing with a quality close to the best without occurrence of cutting failure. The control unit 54 can immediately calculate differences (deviations) of the detection values from the reference values by comparing, with the reference values, the detection values of the size OIS and the peak value PV detected by, for example, analyzing by the image processing unit 53. Then, the processing condition 51c (the focus position Fp and the processing velocity Fr) stored in the storage unit 51 is compensated by adjusting the focus position Fp and the processing velocity (cutting velocity) Fr under the processing condition 51c such that the deviations are within the control range 61 or are eliminated, that is, the detection values approach the reference values. For example, the focus position Fp can be adjusted by adjustment of the collimator lens 21 or the condensing lens 23 for processing.

Figure 11, Figure 12, and Figure 13 each illustrate relation among the size OIS of the optical image OI, the peak value PV of the light intensity LI of the optical image OI, and the quality determination result (hereinafter, referred to as "quality result") in the laser processing by the laser processing machine 100. In each figure, the vertical axis represents the peak value PV, and the horizontal axis represents the size OIS. In Figure 11 to Figure 13, "◊" plotted in the figure denotes the position of the size OIS and the peak value PV under the reference condition 60, and "O" denotes the position of the size OIS and the peak value PV in a case where both the processing velocity Fr and the quality of a product are good. In addition, "●" denotes the positions of the size OIS and the peak value PV in a case where the quality of the product is good but processing failure occurs or in a case where the processing velocity is inappropriate, for example, the processing velocity Fr is slow. **"▲"** denotes the positions of the size OIS and the peak value PV in a case where dross is adhered on the workpiece W. "×" denotes the positions of the size OIS and the peak value PV in a case where processing failure occurs.

Figure 11 illustrates a distribution of the size OIS, the peak value PV, and the quality result in laser processing when a processing condition appropriately changed in a case where the condition that the workpiece W of stainless steel (SUS304) with a thickness of 10 mm is irradiated with a laser beam L having an output of 9 kW at a focus position Fp of -4 and a processing velocity Fr of F4500 is defined as the reference condition 60. According to the relation illustrated in Figure 11, it can be seen that the control range 61 including the reference condition 60 falls within a range in which the size OIS is about 0.9 times to about 1.1 times, and the peak value PV is about 0.75 times to about 1.25 times, as a rough standard for the reference condition 60 that both the size OIS and the peak value PV are 1.0. Therefore, for example, as long as the size OIS and the peak value PV detected during laser processing fall within this control range 61, even when the focus position Fp and/or the processing velocity Fr in the operation of the laser processing unit 1 are deviated slightly from the reference condition 60, it is possible to obtain a product with good cutting quality. With this, when the detected size OIS and peak value PV are the same as the reference values stored in the evaluation table 51d, it can be said that it is possible to perform laser processing at the focus position Fp and/or the processing velocity Fr considered to be optimum.

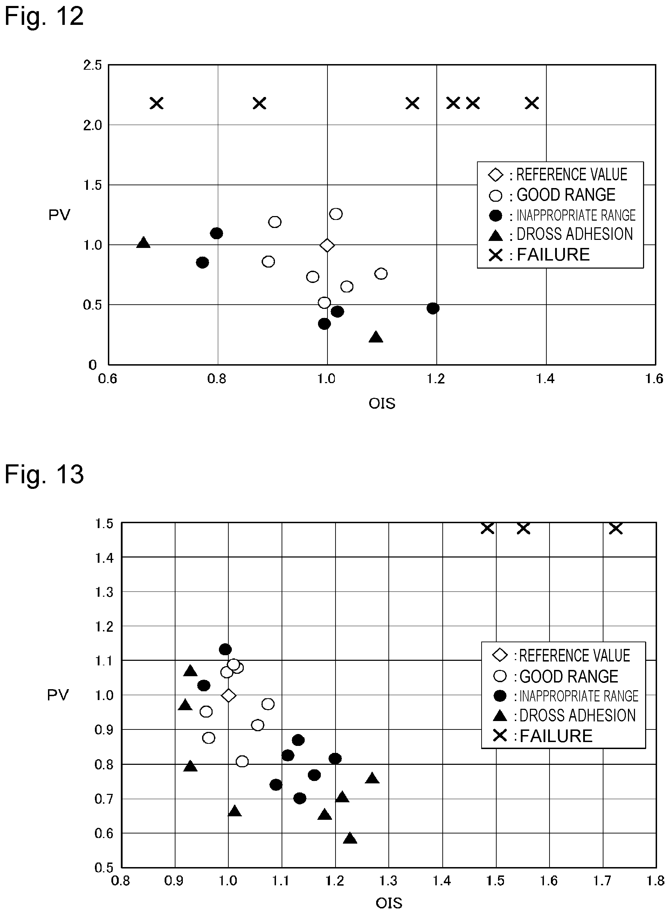

Figure 12 illustrates a distribution of the size OIS, the peak value PV, and the quality result in laser processing when a processing condition appropriately changed by setting the material of the workpiece W, the output of the laser beam L and the like to the same condition illustrated in Figure 11, and changing the thickness of the workpiece W to 6 mm only. According to the relation illustrated in Figure 12, it can be seen that the control range 61 including the reference condition 60 falls within a range in which the size OIS is about 0.85 times to about 1.1 times, and the peak value PV is about 0.5 times to about 1.25 times, as a rough standard for the reference condition 60 that both the size OIS and the peak value PV are 1.0. Therefore, for example, as long as the size OIS and the peak value PV detected as described above fall within this control range 61, even when the focus position Fp and/or the processing velocity Fr are deviated slightly from the reference condition 60, it can be said that it is possible to obtain a product by performing laser processing at the focus position Fp and/or the processing velocity Fr considered to be a good cutting quality and optimum.

Figure 13 illustrates a distribution of the size OIS, the peak value PV, and the quality result in laser processing when a processing condition appropriately changed by setting the material of the workpiece W, the output of the laser beam L and the like to the same condition illustrated in Figure 11 and Figure 12, and changing the thickness of the workpiece W to 15 mm only. According to the relation illustrated in Figure 13, it can be seen that the control range 61 including the reference condition 60 falls within a range in which the size OIS is about 0.95 times to about 1.1 times, and the peak value PV is about 0.8 times to about 1.1 times, as a rough standard for the reference condition 60 that both the size OIS and the peak value PV are 1.0. Therefore, as long as the size OIS and the peak value PV detected as described above fall within the control range 61, even when the focus position Fp and/or the processing velocity Fr are deviated slightly from the reference condition 60, it can be said that it is possible to obtain a product by performing laser processing at the focus position Fp and/or the processing velocity Fr considered to be a good cutting quality and optimum.

From the above results, even in a case where the thickness of the workpiece W is any of 10 mm, 6 mm and 15 mm, as a basic tendency, regarding the processing velocity (cutting velocity) Fr, it is assumed that when the processing velocity Fr is fast, the peak value PV becomes higher as the tip end part of the cutting front is longer. Further, it is assumed that when the processing velocity Fr is slow, the peak value PV becomes lower as the angle of the cutting front rises. In addition, it is assumed that when the processing velocity Fr is fast, the size OIS becomes larger (longer) as the tip end part of the cutting front is longer, and it is assumed that when the processing velocity Fr is slow, the size OIS becomes smaller (shorter) as the angle of the cutting front rises.

Further, regarding the focus position Fp, when the focus position Fp is low (deep), the power density of the laser beam L decreases on the front surface of the workpiece W, but it is considered that the melting is easily performed because the laser beam L spreads over the entire cutting front. Therefore, it is assumed that the peak value PV is high and the size OIS is small (short). In the case of cutting failure (gouging), it is found that the peak value PV is remarkably increased by saturating and the size OIS is also remarkably increased, and therefore it can be easily excluded from the quality determination.

Then, according to summary of the information so far regarding the proof of the laser processing of the present applicant, it is found that when a certain reference condition 60 is set, and the size OIS and peak value PV are within the range of about 0.9 times to about 1.1 times and within the range of about 0.8 times to about 1.2 times (control range 61), respectively, with respect to the detected size OIS and peak value PV of the reference condition 60, the laser processing can be the laser processing under the good processing condition 51c, and when the detected size OIS and peak value PV are the same as the reference values, the laser processing can be the laser processing under the optimum processing condition 51c. Therefore, in the laser processing machine 100 of this embodiment, the operation of the laser processing unit 1 (processing velocity Fr and/or focus position Fp) can be controlled such that the size OIS and the peak value PV approach the size OIS and the peak value PV in the laser processing of the workpiece W under the above reference condition 60 by using the detection values of the size OIS and the peak value PV as the parameters based on the image information of the optical image OI obtained by imaging the workpiece W with the camera 40, or such that the size OIS and the peak value PV fall within the control range 61 in a case where the size OIS and the peak value PV are deviated from the control range 61, for example.

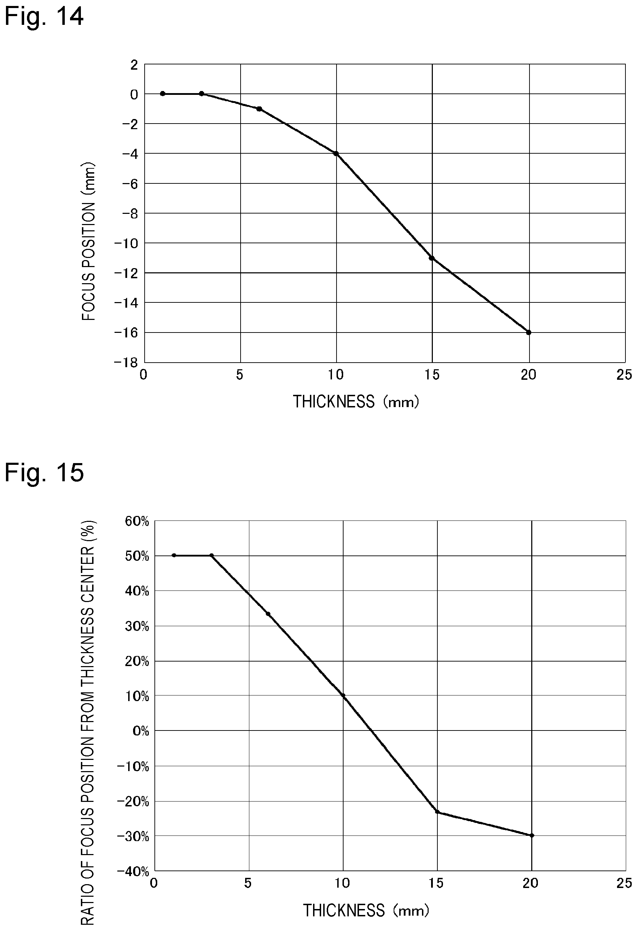

Figure 14 is a graph illustrating relation between the thickness of the workpiece W and the focus position Fp of the laser beam L in an initial processing condition of the laser processing by the laser processing machine 100. Figure 15 is a graph illustrating relation between the thickness of the workpiece W and the ratio of the focus position Fp of the laser beam L from a thickness center in the initial processing condition of the laser processing by the laser processing machine 100. The material of the workpiece W is stainless steel (SUS304) as described above.

As illustrated in Figure 14, as the initial processing condition, for example, when the thickness of the workpiece W is (1) 1 mm and (2) 3 mm, the initial focus position Fp can be set to 0, when the thickness of the workpiece W is (3) 6 mm, the initial focus position Fp can be set to -1, when the thickness of the workpiece W is (4) 10 mm, the initial focus position Fp can be set to -4, when the thickness of the workpiece W is (5) 15 mm, the initial focus position Fp can be set to -11, and when the thickness of the workpiece W is (6) 20 mm, the initial focus position Fp can be set to -16. This is the initial processing condition of the focus position Fp. In the actual laser processing, the laser processing starts from the initial focus positions Fp thus set, but these focus positions Fp can be controlled in real time during the laser processing.

As illustrated in Figure 15, in the case of the above (1), the distance of the focus position Fp from the thickness center of the workpiece W is 0.5 mm, and therefore the ratio of the focus position Fp from the thickness center is 50%. In the case of the above (2), the distance of the focus position Fp from the thickness center of the workpiece W is 1.5 mm, and therefore the ratio of the focus position Fp from the thickness center is 50%. In the case of the above (3), the distance of the focus position Fp from the thickness center of the workpiece W is 2.0 mm, and therefore the ratio of the focus position Fp from the thickness center is 33%. In the case of the above (4), the distance of the focus position Fp from the thickness center of the workpiece W is 1.0 mm, and therefore the ratio of the focus position Fp from the thickness center is 10%.

In the case of the above (5), the distance of the focus position Fp from the thickness center of the workpiece W is -3.5 mm, and therefore the ratio of the focus position Fp from the thickness center is -23%. Furthermore, in the case of the above (6), the distance of the focus position Fp from the thickness center of the workpiece W is -6.0 mm, and therefore the ratio of the focus position Fp from the thickness center is -30%.
As described above, from Figure 14 and Figure 15, it is possible to summarize the relation between the thickness of the workpiece W and the focus position Fp under the initial processing condition of the laser processing by the laser processing machine 100.

In consideration of the relation between the thickness of the workpiece W and the focus position Fp of the laser beam L, the processing condition 51c that satisfies a margin (a processing margin, an allowable range even slightly different from the reference condition 60) in both the processing velocity Fr and the focus position Fp is set as the control range 61 including the reference condition 60 enabling obtainment of the optimum processing result, that is, the range in which the good processing result can be obtained (hereinafter referred to as a "good range"). Then, based on the above, the operation of the laser processing unit 1 is controlled. Herein, a concept regarding the setting of the control range 61 that satisfies the above margin in laser processing will be described.

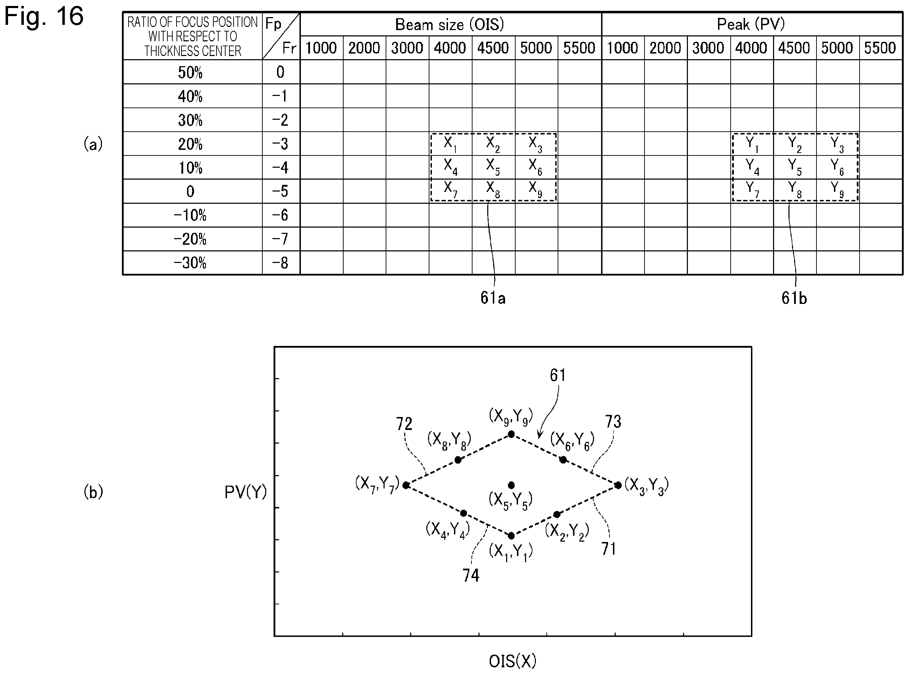

Figure 16 is a table (Figure 16(a)) and a graph (Figure 16 (b)) for conceptually illustrating the control range that can be set by the relation between the size OIS of the optical image OI of the laser processing by the laser processing machine 100, the peak value PV of the light intensity LI, and the quality result. Figure 16(a) illustrates, for example, the processing velocity Fr of the laser processing machine 100 in the horizontal direction of the table for each of the size OIS of the optical image OI and the peak value PV of the light intensity LI, and the focus position Fp (and the ratio of the focus position Fp with respect to the thickness center) of the laser beam L in the vertical direction of the table, represent a combination of the focus position Fp and the processing velocity Fr in each good range. Figure 16(b) illustrates how the control range 61 is represented in the relation between the size OIS and the peak value PV in the good ranges illustrated in Figure 16(a).

First, as illustrated in Figure 16(a), assuming that the frame (X₅, Y₅) in which the focus position Fp is -4 and the processing velocity Fr is F4500 is a point of the reference condition 60, when the above margin is taken into consideration, for example, it is possible to define a good range 61a of the size OIS of the optical image OI including three frames (X₁ to X₉, Y₁ to Y₉) in each of the vertical and horizontal directions and a good range 61b of the peak value PV of the light intensity LI.

Then, as illustrated in Figure 16(b), the horizontal axis is set as a point in each of the corresponding frames (X₁, Y₁, X₂, Y₂, ..., X₉, Y₉) in each of the good ranges 61a and 61b, and plotted on a graph in which the horizontal axis represents size OIS and the vertical axis represents the peak value PV, and the control range 61 is rectangular (a rhombus in the illustrated example) including the points (X₅, Y₅) of the reference condition 60 in an inner region.

This control range 61 can be defined by a first line segment 71, a second line segment 72, a third line segment 73, and a fourth line segment 74, which have respective predetermined inclinations. The first line segment 71 represents relation between the size OIS and the peak value PV in a case where the processing velocity Fr is increased when the focus position Fp is fixed on the upper limit side (-3) of the good ranges 61a and 61b. The second line segment 72 represents relation between the size OIS and the peak value PV in a case where the processing velocity Fr is increased when the focus position Fp is fixed on the lower limit side (-5) of the good ranges 61a and 61b.

Further, the third line segment 73 represents relation between the size OIS and the peak value PV in a case where the focus position Fp is lowered when the processing velocity Fr is fixed on the upper limit side (F2400) of the good ranges 61a and 61b. The fourth line segment 74 represents relation between the size OIS and the peak value PV in a case where the focus position Fp is lowered when the processing velocity Fr is fixed on the lower limit side (F2000) of the good ranges 61a and 61b.

The control range 61 is thus obtained in consideration of the upper limit and the lower limit of the good ranges 61a and 61b, and therefore in the laser processing machine 100, the operation of the laser processing unit 1 is controlled such that the point (not illustrated) representing the relation between the OIS and the peak value PV detected from the image information obtained by imaging the workpiece W with the camera 40 approaches the point (X₅, Y₅) of the reference condition 60 and is included (continues to be included) within the control range 61.

Specifically, the operation of the laser processing unit 1 is controlled by changing at least one of the focus position Fp and the processing velocity Fr of the laser beam L relative to the workpiece W so as to satisfy the control range 61 and approach the reference condition 60. More specifically, regarding the detected size OIS of the optical image OI, for example, in a case where the detected size OIS is smaller than that under the reference condition 60, such control as to accelerate (increase) the processing velocity Fr and/or raise the focus position Fp is performed. On the contrary, for example, in a case where the detected size OIS is larger than that under the reference condition 60, such control as to slow down (decrease) the processing velocity Fr and/or lower the focus position Fp.

Regarding the detected peak value PV of the light intensity LI of the optical image OI, in a case where the detected peak value PV is smaller than that under the reference condition 60, such control as to accelerate (increase) the processing velocity Fr and/or lower the focus position Fp is performed. On the contrary, for example, when the detected peak value PV is larger than that under the reference condition 60, such control as to slow down (decrease) the processing velocity Fr and/or raise the focus position Fp is performed.

Also in a case where the processing condition 51c is compensated, the processing condition 51c is compensated such that the detected size OIS and peak value PV are compared with those under the reference condition 60 from the viewpoint of the above control, and the processing velocity Fr and/or the focus position Fp fall within the control range 61 by increasing/decreasing or raising/lowering the processing velocity Fr and/or the focus position Fp, depending on the magnitude of the detected size OIS and/or the magnitude of the peak value PV. Consequently, it is possible to perform laser processing in the control range 61 enabling maintenance of a good processing result.

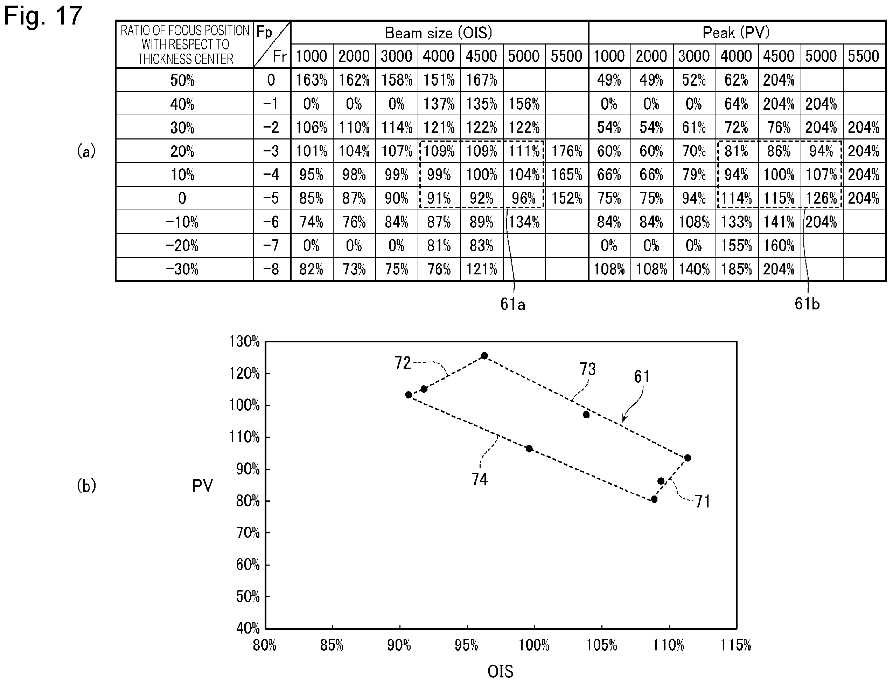

Figure 17 is a table (Figure 17(a)) and a graph (Figure 17(b)) illustrating the contents of the table and the graph of Figure 16 by applying data in Figure 11. When validated data related to the quality result of Figure 11 is applied to Figure 16, as illustrated in Figure 17(a), in a case where respective points of the reference condition 60 in the good ranges 61a and 61b (equivalent to X₅, Y₅ of Figure 16) were represented as "100%", X₁ is represented as "109%", X₂ is represented as "109%", X₃ is represented as "111%", X₄ is represented as "99%", and X₆ is represented as "104%", X₇ is represented as "91%", X₈ is represented as "92%" and X₉ is represented as "96%". On the other hand, Y₁ is represented as "81%", Y₂ is represented as "86%", Y₃ is represented as "94%", Y₄ is represented as "94%", Y₆ is represented as "107%", Y₇ is represented as "114%", Y₈ is represented as "115%", and Y₉ is represented as "126%".

As illustrated in Figure 17(b), the control range 61 based on these data is represented in a rectangular shape, but a shape closer to a band shape than a rhombus shape. In the case illustrated in Figure 17(b), the point of the reference condition 60 is located downward from the vicinity of the center of the control range 61 and close to the fourth line segment 74. However, even in this case, the processing velocity Fr and/or focus position Fp by the laser processing unit 1 is changed such that the detected size OIS and/or detected peak value PV approach those of the reference condition 60 and fall within the control range 61, thereby controlling the operation. It can be said that the above controlling is still important for good (or optimum) laser processing.

As described above, according to the laser processing machine 100 of this embodiment, the optical image OI obtained by imaging the workpiece W at the time of laser processing is analyzed to obtain the detection values of the size OIS of the optical image OI and the peak value PV of the light intensity LI of the optical image OI, and the laser processing is performed by controlling the focus position Fp and the processing velocity (cutting velocity) Fr of the laser beam L within the control range 61 such that, for example, the detection values approach the reference values of the reference condition 60, that is, the detected size OIS and peak value PV are the same as the reference value. Consequently, it is possible to perform laser processing such that good processing results including optimum processing results can always be obtained. Further, the laser processing machine 100 can immediately calculate the deviation of the detection value from this reference value, adjust the focus position Fp and the cutting velocity Fr so as to eliminate the deviation, compensate the processing condition 51c, and control the operation of the laser processing unit 1. Therefore, the laser processing machine 100 can accurately determine and deal with the state of the beam LW from the workpiece W generated in the processing region as a result of irradiating the processing region of the workpiece W with the laser beam L, and control the laser processing.

By using the optical image OI when the workpiece W is irradiated with the laser beam L, the laser processing machine 100 monitors the optical image OI obtained by imaging the workpiece W with, for example, the camera 40 during processing, so that it is also possible to instantly determine the quality of laser processing. Then, in the laser processing, the detection values of the size OIS of the optical image OI and the peak value PV of the light intensity LI of the optical image OI obtained from the processing region of the workpiece W is continued to be monitored, so that it is possible to perform laser processing while finely adjusting the focus position Fp and the processing velocity (cutting velocity) Fr of the laser beam L so as to achieve optimum laser processing.

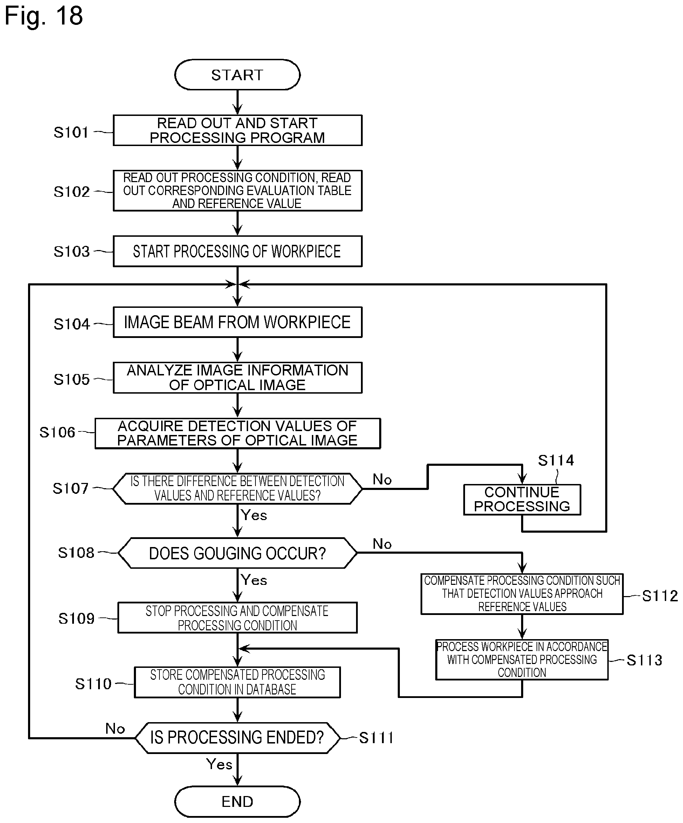

Figure 18 is a flowchart illustrating an example of a flow of laser processing by the laser processing machine 100. In the flowchart of Figure 18, as a precondition, the reference value obtained by performing laser processing in advance is recorded in the evaluation table 51d, and a difference between the reference value and the detection value is derived with reference to the evaluation table 51d. Thus, the processing velocity Fr and/or the focus position Fp are controlled so as to approach the reference condition 60 including this reference value. In addition, when a new processing condition 51c is generated, with reference to the evaluation table 51d recorded in the database 51a, the processing condition 51c in the processing program 51b is rewritten and set as the processing condition 51c for laser processing and used, as described below.

Further, in this flowchart, unless otherwise specified, for the subject of operation of each process, and the process related to data transmission/reception (exchange) in each of the units 51 to 54 including the I/Fs 2 to 4 in the NC device 50 illustrated in Figure 2, the contents described above can be applied, and therefore the above description will be omitted.

As illustrated in Figure 18, first, the control unit 54 reads out the processing program 51b for executing laser processing from the database 51a via the storage unit 51, and starts processing program 51b (Step S101). Next, the processing condition 51c recorded (included) in the started processing program 51b is read, and the reference value or the like of the evaluation table 51d corresponding to the processing condition 51c is read (Step S102).

The control unit 54 controls the laser processing unit 1 in accordance with the processing condition 51c based on the read information to irradiate the workpiece W with the laser beam L, and start processing of the workpiece W (Step S103). Then, the camera 40 images the beam LW from the workpiece W generated in the processing region (Step S104).

After the image is imaged by the camera 40, the image processing unit 53 analyzes the image information of the optical image OI of the beam LW obtained by imaging (Step S105), and calculates and acquires the detection values of the size OIS of the optical image OI and the peak value PV of the light intensity LI of the optical image OI as the parameters of the optical image OI (Step S106).

The control unit 54 compares the detection values of the size OIS of the optical image OI and the peak value PV of the light intensity LI of the optical image OI obtained by the image processing unit 53 with the reference values of the read evaluation table 51d, determines, for example, whether or not there is a difference between the detection values and the reference values to such an extent as to deviate from the control range 61 (Step S107). In a case where it is determined that there is no difference between both the values to the extent that the value deviate from the control range 61 (No in Step S107), the processing is performed under a processing condition that the detection values fall within (remain) within the control range 61 including the reference condition 60, and therefore the control of the laser processing unit 1 according to the processing condition 51c currently used is maintained, the processing is continued (Step S114), the process proceeds to the above Step S104, and the subsequent process is repeated.

On the other hand, in a case where it is determined that there is a difference between both the value to such an extent as to deviate from the control range 61 (Yes in Step S107), it is determined, for example, whether or not the difference is due to the occurrence of gouging (Step S108). In a case where it is determined that gouging occurs (Yes in Step S108), the control unit 54 determines that processing is being performed under the processing condition that the detection values deviate from the reference condition 60 and deviate from the control range 61. Then, the operation of the laser processing unit 1 is stopped to stop the processing. Then, for a next workpiece W, the processing condition (for example, the processing velocity Fr and the focus position Fp) 51c is compensated such that the detection values fall within the control range 61 as compared with the reference values (Step S109). Thereafter, the control unit 54 overwrites and records the compensated processing condition 51c on the processing program 51b via the storage unit 51, stores the recorded processing condition 51c in the database 51a (Step S110), and determines whether or not the processing of the workpiece W is finished (Step S111).

In a case where it is determined that the processing is finished (Yes in Step S111), the series of processes according to this flowchart is finished. In a case where it is determined that the processing is not finished (No in Step S111), the process proceeds to Step S104 and the subsequent process is repeated. In a case where the control unit 54 determines in Step S108 that no gouging occurs (No in Step S108), it is determined that the processing is being performed not under the processing condition that the detection values fall within the above control range 61 but under the processing condition that the gouging does not occur. Then, a new processing condition (for example, a processing condition that the focus position Fp and/or the processing velocity Fr is changed such that the detection values fall within the control range 61) is set, so that processing is performed under the new processing condition. That is, the processing condition (for example, the processing velocity Fr and the focus position Fp) 51c is compensated such that the detection values of the size OIS of the optical image OI and the peak value PV of the light intensity LI of the optical image OI approach the reference values included in the above evaluation table 51d, for example (Step S112).

Then, the operation of the laser processing unit 1 is controlled in accordance with the compensated processing condition 51c to process the workpiece W (Step S113), and the process proceeds to Step S110 to record the compensated processing condition 51c, for example, to overwrite the compensated processing condition 51c on the processing program 51b. After recording, the compensated processing condition 51c is stored in the database 51a (Step S110), and the subsequent process is repeated.

Herein, the compensation of the processing condition 51c will be specifically performed as follows. First, regarding the focus position Fp, for example, in Figure 4, assuming that the processing is performed in a state in which the laser beam L is the reference condition 60 (the cutting velocity Fr is F4500, and the focus position Fp is -4), in a case where the detection values of the size OIS and/or the peak value PV detected from the image information representing the actually imaged optical image OI are detection values representing the optical image OI imaged at -2 of the focus position Fp representing that the focus position Fp becomes higher than the reference value, compensation for lowering the focus position Fp from -2 to the reference value is performed. That is, in this case, the focus position Fp is compensated so as to move to -6, which is lower than -4 which is the focus position Fp of the reference condition 60 by 2. On the contrary, in a case where the detection value is a detection value representing the optical image OI imaged at the focus position Fp of -6, which represents that the focus position Fp is actually lower than the reference value of the focus position Fp, the focus position Fp is compensated so as to move to -2, which is higher than -4 which is the focus position Fp of the reference condition 60 by 2.

Regarding the processing velocity (cutting velocity) Fr, specifically, for example, in Figure 4, assuming that the processing is performed in a state in which the laser beam L is the reference condition 60 (the cutting velocity Fr is F4500, and the focus position Fp is -4), in a case where the detection values of the size OIS and/or the peak value PV detected from the image information representing the actually imaged optical image OI are detection values representing the optical image OI imaged at F3000 of the processing velocity Fr representing that the cutting velocity Fr becomes slower than the reference value, compensation for accelerating the cutting velocity Fr is performed. That is, in this case, the cutting velocity Fr is compensated to F4500 faster by F1500 compared to F4500 which is the cutting velocity Fr of reference condition 60.
On the contrary, in a case where the detection value is a detection value representing the optical image OI imaged at F5500, which represents that the cutting velocity Fr is actually faster than the cutting velocity Fr of the reference condition 60, the cutting velocity Fr is compensated to F4500 slower by F1000 compared to F4500 which is the cutting velocity Fr of the reference condition 60.

In the above Step S113, the workpiece W can be processed in accordance with, for example, the processing condition 51c thus compensated. Further, in the compensation of the processing condition 51c, for example, at least one of the focus position Fp and the cutting velocity Fr only needs to be compensated.

In the determination function for determining the quality of laser processing as described above, the control unit 54 can determine not only the quality of cutting but also the quality of penetration. The quality of the penetrating is determined as follows, for example. That is, during the penetrating, the camera 40 images a reflected beam reflected on the front surface of the workpiece W when the workpiece W is not penetrated, but the camera 40 almost does not receive the beam when the workpiece W is in the penetration state, and therefore the reflected beam is not imaged. The presence or absence of imaging of the reflected beam is detected in accordance with the relation with time such as switching time and imaging time, so that it is possible to determine the quality of the penetrating.

Prediction and management of the occurrence of a processing failure of the workpiece W in the laser processing machine 100 by the control unit 54 refers to various information such as the reference values stored or recorded in the database 51a of the storage unit 51, the processing condition 51c, the respective detection values of parameters, the evaluation table 51d, and the image information of an optical image OI, and using the optical image OI obtained from the processing region of the workpiece W imaged in real time by the camera 40.
The prediction and management is a known technology, the description thereof is omitted here. Thus, it is possible to automatically take appropriate measures (such as stopping of laser processing) before processing failure of the workpiece W occurs.

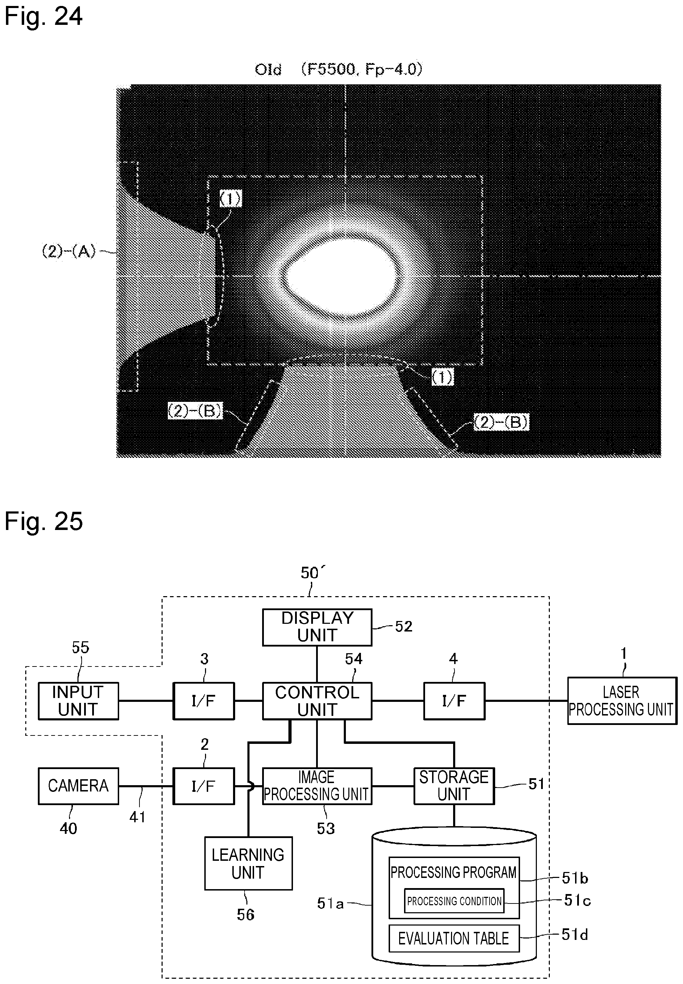

Figure 25 is a block diagram schematically illustrating a functional configuration of a laser processing machine 100 according to another embodiment. In the description after Figure 25, the same or corresponding components are designated by the same reference numerals, and duplicate description will be omitted.

As illustrated in Figure 25, an NC device 50' according to this embodiment is different from the NC device 50 of the previous embodiment in that a learning unit 56 which performs machine leaming (reinforcement learning) is connected to the control unit 54. That is, the learning unit 56 includes a state observation unit (not illustrated) that observes, for example, the size OIS of an optical image OI and a peak value PV of light intensity LI as state variables among the above processing quality determination result, an evaluation table 51d of a database 51a, and detection values of parameters (the size OIS of the optical image OI and the peak value PV of the light intensity LI of the optical image OI) obtained by analyzing image information of the optical image OI and the optical image OI imaged with a camera 40 and obtained. Further, the learning unit 56 includes a decision-making unit that calculates a quality score from a numerical value indicating how close the focus position Fp of a laser beam L and the cutting velocity Fr of the laser beam L relative to the workpiece W are to the focus position Fp and the cutting velocity Fr of the reference condition 60, respectively, and processing quality, learns by associating the quality score with the state variable observed by the state observation unit, and determines a processing condition 51c. This decision-making unit also has a function of a correction unit that corrects the focus position Fp and the cutting velocity Fr which are the reference condition 60. By machine learning in the learning unit 56, various elements such as state variables necessary for determining a good or optimum processing condition 51c can also be accumulated in the database 51a like the above good ranges 61a and 61b, control range 61, and first line segment 71 to fourth line segment 74. Then, when a trained learning model and learning data thus obtained by machine learning are accumulated in, for example, the database 51a or the like and utilized in the laser processing machine 100, it is possible to realize fully automatic control or the like of the laser processing unit 1.

Depending on a user of the laser processing machine 100, even in a case where the laser processing is not performed under the good or optimum processing condition 51c within the good range 61a or 61b (Figure 16) or the control range 61 (Figure 4), when it is possible to perform laser processing with quality close to such a processing condition 51c (good laser processing) faster, there is a need to perform high-quality laser processing under the good processing condition at that time (hereinafter referred to as a "quasi-optimum processing condition") at high speed. Therefore, it is also possible to configure the quasi-optimum processing condition such that the quasi-optimum processing condition can be easily selected and set by machine learning.

Herein, as a specific example of the machine learning, for example, the following can be mentioned.

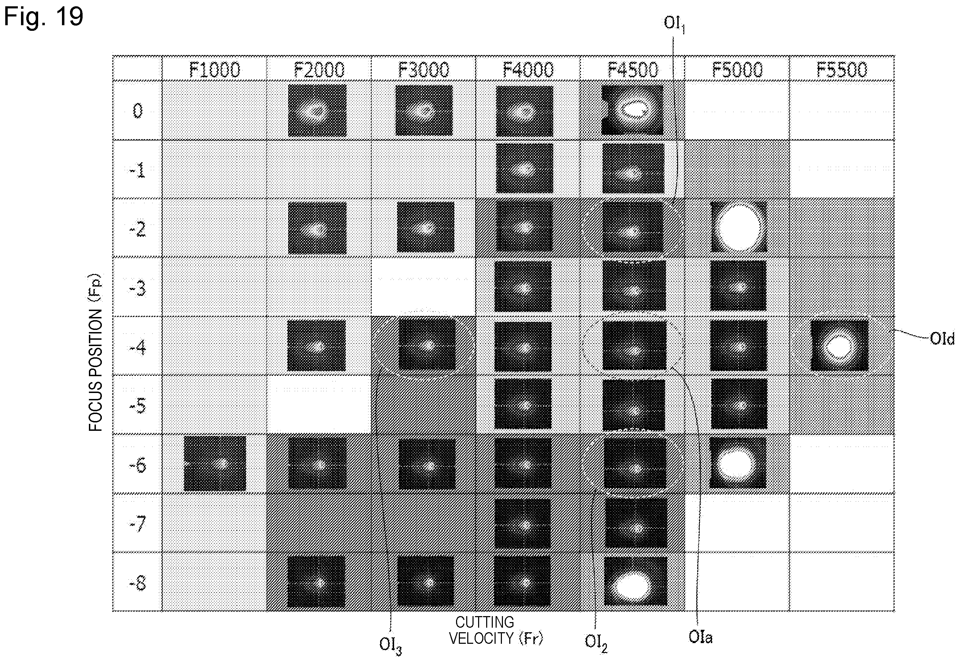

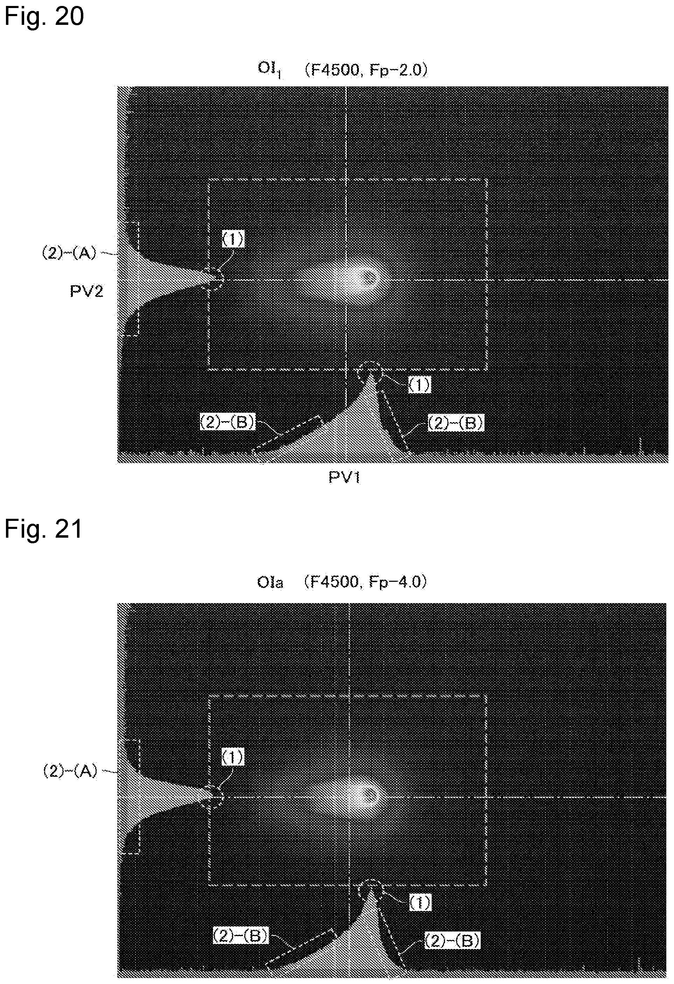

Figure 19 is a diagram for illustrating an example of the relation between the optical image OI and the focus position Fp and the processing velocity (cutting velocity) Fr of the laser beam L for explaining machine learning by the laser processing machine 100, and Figure 20 to Figure 24 are each a diagram for illustrating an example of a parameter of the optical image OI.

As illustrated in Figure 19, the optical image OI imaged by the camera 40 can be represented by the relation between the focus position Fp and the cutting velocity Fr, and the state variables used for machine learning are created by, for example, focusing on the following points (1) to (3) and analyzing the image information by the image processing unit 53.

That is, herein, attention is paid to peripheral optical images OI of the control range 61 (Figure 4) including a first optical image Ola of the above-mentioned reference condition 60 (Figure 4). As peripheral optical images OI, for example, a fourth optical image Old, a fifth optical image OI₁, a sixth optical image OI₂, and a seventh optical image OI₃ will be picked up and described.

### [Focus Point (1)]

First, in distribution of the light intensity LI, the value of the peak value PV of the light intensity LI of the optical image OI slightly increases or decreases as the focus position Fp becomes a processing condition deviated from the reference condition 60 as the optimum processing condition. That is, when the peak value PV increases, it can be considered that the focus position Fp is deviated from the reference condition 60. The peak value PV is classified into, for example, PV1 for the peak value in the direction along the traveling direction of the laser beam L and PV2 for the peak value in the direction perpendicular to the traveling direction, as illustrated in Figure 20. Also in this case, the same tendency was observed for both the peak values PV1 and PV2. This tendency can be grasped from a portion illustrated in (1) in analysis images of Figure 21 to Figure 23.

### [Focus Point (2)]

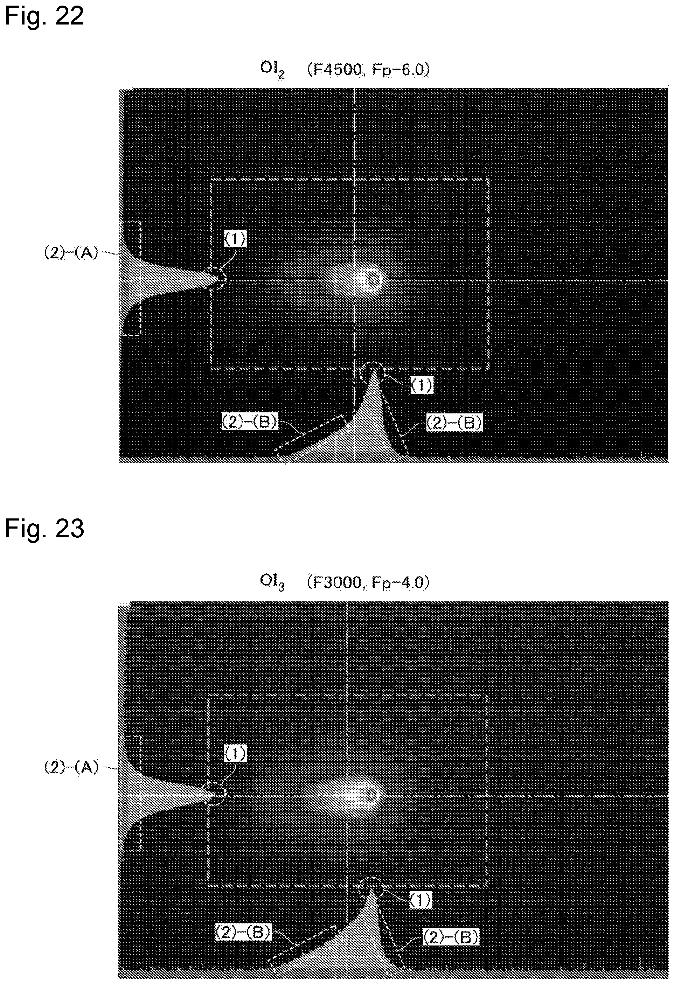

In distribution of the light intensity LI, as the focus position Fp raises (see the analysis images in the order of OI₂ (Figure 22), Ola (Figure 21) and OI₁ (Figure 20)), the laser beam L is difficult to reach a bottom surface of a cutting front. Therefore, as is apparent from portions (2)-(A) in the analysis images of Figure 22, Figure 21 and Figure 20, it is seen that the "width of a base of a mountain shape", which is a distribution shape of the light intensity LI representing the peak value PV2, tends to increase in the order of the sixth optical image OI₂, the first optical image Ola, and the fifth optical image OI₁. Further, as is apparent from portions (2)-(B) in the analysis images of Figure 22, Figure 21 and Figure 20, it is seen that a "mountain-shaped slope", which is a distribution shape of the light intensity LI representing the peak value PV1, tends to be gentle in the order of the sixth optical image OI₂, the first optical image Ola, and the fifth optical image OI₁.

As the cutting velocity Fr becomes slower (see the analysis images in the order of (Old (Figure 24), Ola (Figure 21), and OI₃ (Figure 23)), the laser beam L is easy to reach the bottom surface of the cutting front. Therefore, as is apparent from portions (2)-(A) in the analysis images of Figure 24, Figure 21 and Figure 23, it is seen that the "width of a base of a mountain shape", which is the distribution shape of the light intensity LI representing the peak value PV2, tends to be narrower in the fourth optical image Old, the first optical image Ola, and the seventh optical image OI₃ in this order. Further, as is apparent from portions (2)-(B) in the analysis images of Figure 24, Figure 21 and Figure 23, it is seen that a "mountain-shaped slope", which is the distribution shape of the light intensity LI representing the peak value PV1, tends to be steeper in the fourth optical image Old, the first optical image Ola, and the seventh optical image OI₃ in this order. As is apparent from the analysis image of Figure 24, when gouging occurs, the peak value PV increases sharply.

### [Focus Point (3)]

In distribution of the size OIS, as the focus position Fp lowers (see the analysis images in the order of OI₁ (Figure 20), Ola (Figure 21), and OI₂ (Figure 22)), the laser beam L is easy to reach the bottom surface of the cutting front. Therefore, as is apparent in the analysis images of Figure 20, Figure 21 and Figure 22, it is seen that the size OIS tends to become smaller in the order of the fifth optical image OI₁, the first optical image Ola, and the sixth optical image OI₂.

Next, in addition to state variables created by analyzing the image information based on the focus points (1) to (3), the leaming unit 56 calculates a quality score from the numerical value indicating how close the focus position Fp of the laser beam L and the cutting velocity Fr are to the reference condition 60, and the processing quality. The numerical value indicating how close the focus position Fp and the cutting velocity Fr are to the reference condition 60 can be changed by other information of the focus position Fp and cutting velocity Fr of the laser beam L included in the processing condition 51c, and is represented in an arbitrary numerical range. Further, the processing quality refers to quality determined by, for example, the presence or absence of cutting failure, the actual height of dross, the degree of gouging, or the like, and this processing quality can also affect the quality score together with the above numerical value. The learning unit 56 learns by associating the quality score thus calculated with the state variables, and determines the processing condition 51c. Then, the control unit 54 performs laser processing under the determined processing condition 51c, and the learning unit 56 displays how close the focus position Fp and the cutting velocity Fr of the laser beam L at that time are to, for example, the optimum processing condition, on the display unit 52 by the quality score representing the processing quality (for example, the processing quality such as "optimum", "excellent", "good"), and corrects the focus position Fp and the cutting velocity Fr which are the reference condition 60 for approaching at least the quasi-optimum processing condition. Further, the learning unit 56 calculates an adjustment score representing an adjustment amount of a numerical value indicating how close the focus position Fp and the cutting velocity F of the processing condition 51c actually used for laser processing are to the focus position Fp and the cutting velocity Fr of the corrected reference condition 60, and what degree to approach is. Thus, the learning unit 56 uses the size OIS of the optical image OI and the cutting velocity Fr with respect to the workpiece W as the state variables, and represents how close the focus position Fp and the cutting velocity Fr of the laser beam L are close to the reference condition 60, by the quality score calculated from the numerical value and the processing quality, learns by associating the state variables with the quality score, and determines the processing condition 51c. Learning data and the like obtained by various data used for machine learning are stored in the storage unit 51 and accumulated in the database 51a.

As a result of performing such machine learning, for example, based on the image information of the optical image OI obtained from the image processing unit 53 by being imaged with the camera 40 in real time during laser processing, and learning data from the learning unit 56, the control unit 54 can display, for example, the processing quality in the laser processing currently in progress as a quality score on the display unit 52, or display a numerical value or the like representing an adjustment degree to bring the focus position Fp and the cutting velocity Fr closer to those of the reference condition 60 in the laser processing currently in progress as an adjustment score on the display unit 52. Machine learning makes it possible to automatically determine and adjust the processing conditions 51c and perform automatic control.

As described above, according to this embodiment, it is possible to perform laser processing by obtaining the detection values of the size OIS of the optical image OI and the peak value PV of the light intensity LI of the optical image OI from the image information of the optical image OI in the processing region of the workpiece W, and controlling the focus position Fp and the cutting velocity Fr of the laser beam L so as to bring the detection values close to the reference values, for example. Consequently, as a result of irradiating the processing region with the laser beam L, it is possible to accurately determine and deal with the state of the beam LW generated in the processing region and control the laser processing.

### Reference Signs List

- 1: laser processing unit
- 2: video interface
- 3: input interface
- 4: output interface
- 8: analysis image
- 9: optical image region
- 10: laser oscillator
- 11: process fiber
- 20: laser processing head
- 20a: housing
- 21: collimator lens
- 22: bend mirror
- 23: condensing lens for processing
- 24: condensing lens for imaging
- 40: camera
- 50: NC device
- 51: storage unit
- 51a: database
- 52: display unit
- 53: image processing unit
- 54: control unit
- 55: input unit
- 100: laser processing machine

## Claims

1. A laser processing machine (100) comprising:
a laser processing unit (1) configured to process laser cutting a workpiece by using a laser beam;
an imaging device (40) configured to image the workpiece irradiated with the laser beam; and
a control device (50) configured to process laser cutting and configured to control the laser processing unit (1) in accordance with a processing condition for processing the workpiece,
**characterized in that**
the control device (50) is configured to control operation of the laser processing unit (1) such that size of an optical image (OI) representing a length of an optical image region (9) in a traveling direction of the laser beam and a peak value of light intensity observed from image information obtained by imaging the workpiece with the imaging device (40) approach preset reference values,
the processing condition that defines operation of the laser processing unit (1) controlled by the control device (50) includes a focus position of the laser beam and processing velocity of the laser beam relative to the workpiece, wherein
the control device (50) is configured to control operation of the laser processing unit (1) such that the processing velocity is increased and/or the focus position is raised, in a case where the size of the optical image is smaller than the reference value, and
the control device (50) is configured to control operation of the laser processing unit (1) such that the processing velocity is decreased and/or the focus position is lowered, in a case where the size of the optical image is larger than the reference value,
the size of the optical image is obtained by detecting the outline of the optical image (OI) and thereafter detecting the length of the outline in the traveling direction of the laser beam (L) or by dividing the image information into a multi-step light intensity distribution with the level of the light intensity (LI) of the image around the optical image region (9) as a threshold level, and observing the length in the traveling direction of the optical image (OI) of the obtained light intensity distribution image.

2. A laser processing machine (100) comprising:
a laser processing unit (1) configured to process laser cutting a workpiece by using a laser beam;
an imaging device (40) configured to image the workpiece irradiated with the laser beam; and
a control device (50) configured to process laser cutting and configured to control the laser processing unit (1) in accordance with a processing condition for processing the workpiece,
**characterized in that**
the control device (50) is configured to control operation of the laser processing unit (1) such that size of an optical image (OI) representing a length of an optical image region (9) in a traveling direction of the laser beam and a peak value of light intensity observed from image information obtained by imaging the workpiece with the imaging device (40) approach preset reference values,
the processing condition that defines operation of the laser processing unit (1) controlled by the control device (50) includes a focus position of the laser beam and processing velocity of the laser beam relative to the workpiece, wherein
the control device (50) is configured to control operation of the laser processing unit (1) such that the processing velocity is increased and/or the focus position is lowered, in a case where the peak value of the light intensity is smaller than the reference value, and
the control device (50) is configured to control operation of the laser processing unit (1) such that the processing velocity is decreased and/or the focus position is raised, in a case where the peak value of the light intensity is larger than the reference value,
the size of the optical image is obtained by detecting the outline of the optical image (OI) and thereafter detecting the length of the outline in the traveling direction of the laser beam (L) or by dividing the image information into a multi-step light intensity distribution with the level of the light intensity (LI) of the image around the optical image region (9) as a threshold level, and observing the length in the traveling direction of the optical image (OI) of the obtained light intensity distribution image.

3. The laser processing machine (100) according to claim 1 or 2, wherein
the control device (50) includes:
a storage unit (51a) configured to store the reference values;
an image processing unit (53) configured to analyze the image information, and
calculate the size of the optical image and the peak value of the light intensity; and
a control unit (54) configured to operate the laser processing unit (1) such that the size of the optical image and the peak value approach the reference values stored in the storage unit (51a).

4. A processing method by a laser processing machine (100) including a laser processing unit (1) configured to process laser cutting a workpiece by using a laser beam; an imaging device (40) configured to image the workpiece irradiated with the laser beam; and a control device (50) configured to process laser cutting and configured to control the laser processing unit (1) in accordance with a processing condition for processing the workpiece,
**characterized in that**
the processing method comprising
performing processing by controlling, by the control device (50), operation of the laser processing unit (1) such that size of an optical image (OI) representing a length of an optical image region (9) in a traveling direction of the laser beam and a peak value of light intensity observed from image information obtained by imaging the workpiece with the imaging device (40) satisfy preset reference values,
compensating the processing condition (S112) such that the size of the optical image and the peak value of the light intensity approach the reference values, and controlling operation of the laser processing unit (S113) in accordance with the compensated processing condition,
the compensated processing condition includes a focus position of the laser beam and processing velocity of the laser beam relative to the workpiece, wherein
compensating the processing condition (S112) such that the processing velocity is increased and/or the focus position is raised, in a case where the size of the optical image is smaller than the reference value; and
compensating the processing condition (S112) such that the processing velocity is decreased and/or the focus position is lowered, in a case where the size of the optical image is larger than the reference value,
the size of the optical image is obtained by detecting the outline of the optical image (OI) and thereafter detecting the length of the outline in the traveling direction of the laser beam (L) or by dividing the image information into a multi-step light intensity distribution with the level of the light intensity (LI) of the image around the optical image region (9) as a threshold level, and observing the length in the traveling direction of the optical image (OI) of the obtained light intensity distribution image.

5. A processing method by a laser processing machine (100) including a laser processing unit (1) configured to process laser cutting a workpiece by using a laser beam; an imaging device (40) configured to image the workpiece irradiated with the laser beam; and a control device (50) configured to process laser cutting and configured to control the laser processing unit (1) in accordance with a processing condition for processing the workpiece,
**characterized in that**
the processing method comprising
performing processing by controlling, by the control device (50), operation of the laser processing unit (1) such that size of an optical image (OI) representing a length of an optical image region (9) in a traveling direction of the laser beam and a peak value of light intensity observed from image information obtained by imaging the workpiece with the imaging device (40) satisfy preset reference values,
compensating the processing condition (S112) such that the size of the optical image and the peak value of the light intensity approach the reference values, and controlling operation of the laser processing unit (S113) in accordance with the compensated processing condition,
the compensated processing condition includes a focus position of the laser beam and processing velocity of the laser beam relative to the workpiece, wherein
compensating the processing condition (S112) such that the processing velocity is increased and/or the focus position is lowered, in a case where the peak value of the light intensity is smaller than the reference value; and
compensating the processing condition (S112) such that the processing velocity is decreased and/or the focus position is raised, in a case where the peak value of the light intensity is larger than the reference value,
the size of the optical image is obtained by detecting the outline of the optical image (OI) and thereafter detecting the length of the outline in the traveling direction of the laser beam (L) or by dividing the image information into a multi-step light intensity distribution with the level of the light intensity (LI) of the image around the optical image region (9) as a threshold level, and observing the length in the traveling direction of the optical image (OI) of the obtained light intensity distribution image.

## Patentansprüche

1. Eine Laserbearbeitungsmaschine (100) aufweisend:
eine Laserbearbeitungseinheit (1), die zum Laserschneiden eines Werkstücks unter Verwendung eines Laserstrahls konfiguriert ist;
eine Abbildungsvorrichtung (40), die zum Abbilden des mit dem Laserstrahl bestrahlten Werkstücks konfiguriert ist; und
eine Steuereinheit (50), die zum Laserschneiden konfiguriert ist und zum Steuern der Laserbearbeitungseinheit (1) gemäß einer Bearbeitungsbedingung zum Bearbeiten des Werkstücks konfiguriert ist,
**dadurch gekennzeichnet, dass**
die Steuereinheit (50) so konfiguriert ist, dass sie den Betrieb der Laserbearbeitungseinheit (1) so steuert, dass die Größe eines optischen Bildes (OI), das eine Länge eines optischen Bildbereichs (9) in einer Bewegungsrichtung des Laserstrahls darstellt, und ein Spitzenwert der Lichtintensität, der aus Bildinformationen beobachtet wird, die durch Abbilden des Werkstücks mit der Abbildungsvorrichtung (40) erhalten werden, voreingestellten Referenzwerten nahekommen,
wobei die Bearbeitungsbedingung, die den Betrieb der von der Steuereinheit (50) gesteuerten Laserbearbeitungseinheit (1) definiert, eine Fokusposition des Laserstrahls und eine Bearbeitungsgeschwindigkeit des Laserstrahls relativ zum Werkstück beinhaltet, wobei
die Steuereinheit (50) so konfiguriert ist, dass sie den Betrieb der Laserbearbeitungseinheit (1) so steuert, dass die Bearbeitungsgeschwindigkeit erhöht und/oder die Fokusposition angehoben wird, wenn die Größe des optischen Bildes kleiner als der Referenzwert ist, und
die Steuereinheit (50) so konfiguriert ist, dass sie den Betrieb der Laserbearbeitungseinheit (1) so steuert, dass die Bearbeitungsgeschwindigkeit verringert und/oder die Fokusposition abgesenkt wird, wenn die Größe des optischen Bildes größer als der Referenzwert ist,
die Größe des optischen Bildes durch Erfassen des Umrisses des optischen Bildes (OI) erfasst und anschließend die Länge des Umrisses in der Bewegungsrichtung des Laserstrahls (L) erfasst wird, oder indem die Bildinformationen in eine mehrstufige Lichtintensitätsverteilung mit dem Lichtintensitätspegel (LI) des Bildes um den optischen Bildbereich (9) als Schwellenpegel unterteilt werden, und die Länge in der Bewegungsrichtung des optischen Bildes (OI) des erhaltenen Lichtintensitätsverteilungsbildes beobachtet wird.

2. Eine Laserbearbeitungsmaschine (100) aufweisend:
eine Laserbearbeitungseinheit (1), die zum Laserschneiden eines Werkstücks unter Verwendung eines Laserstrahls konfiguriert ist;
eine Abbildungsvorrichtung (40), die zum Abbilden des mit dem Laserstrahl bestrahlten Werkstücks konfiguriert ist; und
eine Steuereinheit (50), die zum Laserschneiden konfiguriert ist und zum Steuern der Laserbearbeitungseinheit (1) gemäß einer Bearbeitungsbedingung zum Bearbeiten des Werkstücks konfiguriert ist,
**dadurch gekennzeichnet, dass**
die Steuereinheit (50) so konfiguriert ist, dass sie den Betrieb der Laserbearbeitungseinheit (1) so steuert, dass die Größe eines optischen Bildes (OI), das eine Länge eines optischen Bildbereichs (9) in einer Bewegungsrichtung des Laserstrahls darstellt, und ein Spitzenwert der Lichtintensität, der aus Bildinformationen beobachtet wird, die durch Abbilden des Werkstücks mit der Abbildungsvorrichtung (40) erhalten werden, voreingestellten Referenzwerten nahekommen,
wobei die Bearbeitungsbedingung, die den Betrieb der von der Steuereinheit (50) gesteuerten Laserbearbeitungseinheit (1) definiert, eine Fokusposition des Laserstrahls und eine Bearbeitungsgeschwindigkeit des Laserstrahls relativ zum Werkstück beinhaltet, wobei
die Steuereinheit (50) so konfiguriert ist, dass sie den Betrieb der Laserbearbeitungseinheit (1) so steuert, dass die Bearbeitungsgeschwindigkeit erhöht und/oder die Fokusposition abgesenkt wird, wenn der Spitzenwert der Lichtintensität kleiner als der Referenzwert ist, und
die Steuereinheit (50) so konfiguriert ist, dass sie den Betrieb der Laserbearbeitungseinheit (1) so steuert, dass die Bearbeitungsgeschwindigkeit verringert und/oder die Fokusposition angehoben wird, wenn der Spitzenwert der Lichtintensität größer als der Referenzwert ist,
die Größe des optischen Bildes durch Erfassen des Umrisses des optischen Bildes (OI) erfasst und anschließend die Länge des Umrisses in der Bewegungsrichtung des Laserstrahls (L) erfasst wird, oder indem die Bildinformationen in eine mehrstufige Lichtintensitätsverteilung mit dem Lichtintensitätspegel (LI) des Bildes um den optischen Bildbereich (9) als Schwellenpegel unterteilt werden, und die Länge in der Bewegungsrichtung des optischen Bildes (OI) des erhaltenen Lichtintensitätsverteilungsbildes beobachtet wird.

3. Die Laserbearbeitungsmaschine (100) nach Anspruch 1 oder 2, wobei die Steuereinheit (50) aufweist:
eine Speichereinheit (51a), die zum Speichern der Referenzwerte konfiguriert ist;
eine Bildverarbeitungseinheit (53), die so konfiguriert ist, dass sie die Bildinformationen analysiert und die Größe des optischen Bildes sowie den Spitzenwert der Lichtintensität berechnet; und
eine Steuereinheit (54), die so konfiguriert ist, dass sie die Laserbearbeitungseinheit (1) so betreibt, dass sich die Größe des optischen Bildes sowie der Spitzenwert den in der Speichereinheit (51a) gespeicherten Referenzwerten annähern.

4. Ein Bearbeitungsverfahren durch eine Laserbearbeitungsmaschine (100), die eine Laserbearbeitungseinheit (1) aufweist, die so konfiguriert ist, dass sie ein Werkstück unter Verwendung eines Laserstrahls laserschneidet; eine Abbildungsvorrichtung (40), die so konfiguriert ist, dass sie das mit dem Laserstrahl bestrahlte Werkstück abbildet; und eine Steuereinheit (50), die so konfiguriert ist, dass sie das Laserschneiden verarbeitet und die Laserbearbeitungseinheit (1) entsprechend einer Bearbeitungsbedingung für die Bearbeitung des Werkstücks steuert,
**dadurch gekennzeichnet, dass**
das Bearbeitungsverfahren aufweist
Durchführen der Bearbeitung durch Steuern des Betriebs der Laserbearbeitungseinheit (1) durch die Steuereinheit (50) derart, dass die Größe eines optischen Bildes (OI), das eine Länge eines optischen Bildbereichs (9) in einer Bewegungsrichtung des Laserstrahls und einen Spitzenwert der Lichtintensität, der aus Bildinformationen beobachtet wird, die durch Abbilden des Werkstücks mit der Abbildungsvorrichtung (40) erhalten werden, vorgegebenen Referenzwerten entspricht,
Kompensieren der Bearbeitungsbedingung (S112) derart, dass sich die Größe des optischen Bildes und der Spitzenwert der Lichtintensität den Referenzwerten annähern, und Steuern des Betriebs der Laserbearbeitungseinheit (S113) gemäß der kompensierten Bearbeitungsbedingung, wobei die kompensierte Bearbeitungsbedingung eine Fokusposition des Laserstrahls und eine Bearbeitungsgeschwindigkeit des Laserstrahls relativ zum Werkstück beinhaltet, wobei
die Bearbeitungsbedingung (S112) so kompensiert wird, dass die Bearbeitungsgeschwindigkeit erhöht und/oder die Fokusposition angehoben wird, wenn die Größe des optischen Bildes kleiner als der Referenzwert ist; und
Kompensieren der Bearbeitungsbedingung (S112) derart, dass die Bearbeitungsgeschwindigkeit verringert und/oder die Fokusposition abgesenkt wird, wenn die Größe des optischen Bildes größer als der Referenzwert ist,
die Größe des optischen Bildes durch Erfassen des Umrisses des optischen Bildes (OI) erfasst und anschließend die Länge des Umrisses in der Bewegungsrichtung des Laserstrahls (L) erfasst wird, oder indem die Bildinformationen in eine mehrstufige Lichtintensitätsverteilung mit dem Lichtintensitätspegel (LI) des Bildes um den optischen Bildbereich (9) als Schwellenpegel unterteilt werden und die Länge in der Bewegungsrichtung des optischen Bildes (OI) des erhaltenen Lichtintensitätsverteilungsbildes beobachtet wird.

5. Ein Bearbeitungsverfahren durch eine Laserbearbeitungsmaschine (100), die eine Laserbearbeitungseinheit (1) aufweist, die so konfiguriert ist, dass sie ein Werkstück unter Verwendung eines Laserstrahls laserschneidet; eine Abbildungsvorrichtung (40), die so konfiguriert ist, dass sie das mit dem Laserstrahl bestrahlte Werkstück abbildet; und eine Steuereinheit (50), die so konfiguriert ist, dass sie das Laserschneiden verarbeitet und die Laserbearbeitungseinheit (1) entsprechend einer Bearbeitungsbedingung für die Bearbeitung des Werkstücks steuert,
**dadurch gekennzeichnet, dass**
das Bearbeitungsverfahren aufweist
Durchführen der Bearbeitung durch Steuern des Betriebs der Laserbearbeitungseinheit (1) durch die Steuereinheit (50) derart, dass die Größe eines optischen Bildes (OI), das eine Länge eines optischen Bildbereichs (9) in einer Bewegungsrichtung des Laserstrahls und einen Spitzenwert der Lichtintensität, der aus Bildinformationen beobachtet wird, die durch Abbilden des Werkstücks mit der Abbildungsvorrichtung (40) erhalten werden, vorgegebenen Referenzwerten entspricht,
Kompensieren der Bearbeitungsbedingung (S112) derart, dass sich die Größe des optischen Bildes und der Spitzenwert der Lichtintensität den Referenzwerten annähern, und Steuern des Betriebs der Laserbearbeitungseinheit (S113) gemäß der kompensierten Bearbeitungsbedingung, wobei die kompensierte Bearbeitungsbedingung eine Fokusposition des Laserstrahls und eine Bearbeitungsgeschwindigkeit des Laserstrahls relativ zum Werkstück beinhaltet, wobei
die Bearbeitungsbedingung (S112) so kompensiert wird, dass die Bearbeitungsgeschwindigkeit erhöht und/oder die Fokusposition abgesenkt wird, wenn der Spitzenwert der Lichtintensität kleiner als der Referenzwert ist; und
Kompensieren der Bearbeitungsbedingung (S112) derart, dass die Bearbeitungsgeschwindigkeit verringert und/oder die Fokusposition angehoben wird, wenn der Spitzenwert der Lichtintensität größer als der Referenzwert ist,
die Größe des optischen Bildes durch Erfassen des Umrisses des optischen Bildes (OI) erfasst und anschließend die Länge des Umrisses in der Bewegungsrichtung des Laserstrahls (L) erfasst wird, oder indem die Bildinformationen in eine mehrstufige Lichtintensitätsverteilung mit dem Lichtintensitätspegel (LI) des Bildes um den optischen Bildbereich (9) als Schwellenpegel unterteilt werden und die Länge in der Bewegungsrichtung des optischen Bildes (OI) des erhaltenen Lichtintensitätsverteilungsbildes beobachtet wird.

## Revendications

1. Machine de traitement laser (100) comprenant :
une unité de traitement laser (1) configurée pour effectuer la découpe laser d'une pièce en utilisant un faisceau laser ;
un dispositif d'imagerie (40) configuré pour imager la pièce irradiée par le faisceau laser ; et
un dispositif de contrôle (50) configuré pour effectuer la découpe laser et configuré pour contrôler l'unité de traitement laser (1) conformément à une condition de traitement de la pièce,
**caractérisée en ce que**
le dispositif de contrôle (50) est configuré pour contrôler le fonctionnement de l'unité de traitement laser (1) de sorte que la taille d'une image optique (OI) représentant la longueur d'une région d'image optique (9) en direction de déplacement du faisceau laser et la valeur de crête de l'intensité lumineuse observée à partir de l'information d'image obtenue par imagerie de la pièce avec le dispositif d'imagerie (40) se rapprochent de valeurs de référence prédéfinies,
la condition de traitement qui définit le fonctionnement de l'unité de traitement laser (1) contrôlée par le dispositif de contrôle (50) inclut une position de mise au point du faisceau laser et une vitesse de traitement du faisceau laser par rapport à la pièce, dans laquelle
le dispositif de contrôle (50) est configuré pour contrôler le fonctionnement de l'unité de traitement laser (1) de manière à augmenter la vitesse de traitement et/ou à relever la position de mise au point, dans le cas où la taille de l'image optique est inférieure à la valeur de référence, et
le dispositif de contrôle (50) est configuré pour contrôler le fonctionnement de l'unité de traitement laser (1) de manière à diminuer la vitesse de traitement et/ou à abaisser la position de mise au point, dans le cas où la taille de l'image optique est supérieure à la valeur de référence,
la taille de l'image optique est obtenue en détectant le contour de l'image optique (OI) puis en détectant la longueur du contour en direction de déplacement du faisceau laser (L) ou en divisant l'information d'image en une distribution d'intensité lumineuse échelonnée avec le niveau de l'intensité lumineuse (LI) de l'image autour de la région de l'image optique (9) comme niveau de seuil, et
en observant la longueur en direction de déplacement de l'image optique (OI) de l'image de distribution d'intensité lumineuse obtenue.

2. Machine de traitement laser (100) comprenant :
une unité de traitement laser (1) configurée pour effectuer la découpe laser d'une pièce en utilisant un faisceau laser ;
un dispositif d'imagerie (40) configuré pour imager la pièce irradiée par le faisceau laser ; et
un dispositif de contrôle (50) configuré pour effectuer la découpe laser et configuré pour contrôler l'unité de traitement laser (1) conformément à une condition de traitement de la pièce,
**caractérisée en ce que**
le dispositif de contrôle (50) est configuré pour contrôler le fonctionnement de l'unité de traitement laser (1) de sorte que la taille d'une image optique (OI) représentant la longueur d'une région d'image optique (9) en direction de déplacement du faisceau laser et la valeur de crête de l'intensité lumineuse observée à partir de l'information d'image obtenue par imagerie de la pièce avec le dispositif d'imagerie (40) se rapprochent de valeurs de référence prédéfinies,
la condition de traitement qui définit le fonctionnement de l'unité de traitement laser (1) contrôlée par le dispositif de contrôle (50) inclut une position de mise au point du faisceau laser et une vitesse de traitement du faisceau laser par rapport à la pièce, dans laquelle
le dispositif de contrôle (50) est configuré pour contrôler le fonctionnement de l'unité de traitement laser (1) de manière à augmenter la vitesse de traitement et/ou à abaisser la position de mise au point, dans le cas où la valeur de crête de l'intensité lumineuse est inférieure à la valeur de référence, et le dispositif de contrôle (50) est configuré pour contrôler le fonctionnement de l'unité de traitement laser (1) de manière à diminuer la vitesse de traitement et/ou à relever la position de mise au point, dans le cas où la valeur de crête de l'intensité lumineuse est supérieure à la valeur de référence,
la taille de l'image optique est obtenue en détectant le contour de l'image optique (OI) puis en détectant la longueur du contour en direction de déplacement du faisceau laser (L) ou en divisant l'information d'image en une distribution d'intensité lumineuse échelonnée avec le niveau de l'intensité lumineuse (LI) de l'image autour de la région de l'image optique (9) comme niveau de seuil, et
en observant la longueur en direction de déplacement de l'image optique (OI) de l'image de distribution d'intensité lumineuse obtenue.

3. Machine de traitement laser (100) selon la revendication 1 ou 2, dans laquelle le dispositif de contrôle (50) inclut :
une unité de stockage (51a) configurée pour stocker les valeurs de référence ;
une unité de traitement d'images (53) configurée pour analyser l'information d'image et pour calculer la taille de l'image optique et la valeur de crête de l'intensité lumineuse ; et
une unité de contrôle (54) configurée pour faire fonctionner l'unité de traitement laser (1) de sorte que la taille de l'image optique et la valeur de crête se rapprochent des valeurs de référence stockées dans l'unité de stockage (51a).

4. Procédé de traitement par une machine de traitement laser (100) incluant une unité de traitement laser (1) configurée pour effectuer la découpe laser d'une pièce en utilisant un faisceau laser ; un dispositif d'imagerie (40) configuré pour imager la pièce irradiée par le faisceau laser ; et un dispositif de contrôle (50) configuré pour effectuer la découpe laser et pour contrôler l'unité de traitement laser (1) conformément à une condition de traitement de la pièce,
**caractérisé en ce que**
le procédé de traitement comprend
la mise en œuvre du traitement en contrôlant, par le dispositif de contrôle (50), le fonctionnement de l'unité de traitement laser (1) de sorte que la taille d'une image optique (OI) représentant la longueur d'une région d'image optique (9) en direction de déplacement du faisceau laser et la valeur de crête de l'intensité lumineuse observée à partir de l'information d'image obtenue par imagerie de la pièce avec le dispositif d'imagerie (40) satisfont à des valeurs de référence prédéfinies,
la compensation de la condition de traitement (S112) de sorte que la taille de l'image optique et la valeur de crête de l'intensité lumineuse se rapprochent des valeurs de référence, et le contrôle du fonctionnement de l'unité de traitement laser (S113) conformément à la condition de traitement compensée,
la condition de traitement compensée inclut une position de mise au point du faisceau laser et une vitesse de traitement du faisceau laser par rapport à la pièce, avec
la compensation de la condition de traitement (S112) de manière à augmenter la vitesse de traitement et/ou à relever la position de mise au point, dans le cas où la taille de l'image optique est inférieure à la valeur de référence, et
la compensation de la condition de traitement (S112) de manière à diminuer la vitesse de traitement et/ou à abaisser la position de mise au point, dans le cas où la taille de l'image optique est supérieure à la valeur de référence,
la taille de l'image optique est obtenue en détectant le contour de l'image optique (OI) puis en détectant la longueur du contour en direction de déplacement du faisceau laser (L) ou en divisant l'information d'image en une distribution d'intensité lumineuse échelonnée avec le niveau de l'intensité lumineuse (LI) de l'image autour de la région de l'image optique (9) comme niveau de seuil, et en observant la longueur en direction de déplacement de l'image optique (OI) de l'image de distribution d'intensité lumineuse obtenue.

5. Procédé de traitement par une machine de traitement laser (100) incluant une unité de traitement laser (1) configurée pour effectuer la découpe laser d'une pièce en utilisant un faisceau laser ; un dispositif d'imagerie (40) configuré pour imager la pièce irradiée par le faisceau laser ; et un dispositif de contrôle (50) configuré pour effectuer la découpe laser et pour contrôler l'unité de traitement laser (1) conformément à une condition de traitement de la pièce,
**caractérisé en ce que**
le procédé de traitement comprend
la mise en œuvre du traitement en contrôlant, par le dispositif de contrôle (50), le fonctionnement de l'unité de traitement laser (1) de sorte que la taille d'une image optique (OI) représentant la longueur d'une région d'image optique (9) en direction de déplacement du faisceau laser et la valeur de crête de l'intensité lumineuse observée à partir de l'information d'image obtenue par imagerie de la pièce avec le dispositif d'imagerie (40) satisfont à des valeurs de référence prédéfinies,
la compensation de la condition de traitement (S112) de sorte que la taille de l'image optique et la valeur de crête de l'intensité lumineuse se rapprochent des valeurs de référence, et le contrôle du fonctionnement de l'unité de traitement laser (S113) conformément à la condition de traitement compensée,
la condition de traitement compensée inclut une position de mise au point du faisceau laser et une vitesse de traitement du faisceau laser par rapport à la pièce, avec
la compensation de la condition de traitement (S112) de manière à augmenter la vitesse de traitement et/ou à abaisser la position de mise au point, dans le cas où la valeur de crête de l'intensité lumineuse est inférieure à la valeur de référence ; et
la compensation de la condition de traitement (S112) de manière à diminuer la vitesse de traitement et/ou à relever la position de mise au point, dans le cas où la valeur de crête de l'intensité lumineuse est supérieure à la valeur de référence,
la taille de l'image optique est obtenue en détectant le contour de l'image optique (OI) puis en détectant la longueur du contour en direction de déplacement du faisceau laser (L) ou en divisant l'information d'image en une distribution d'intensité lumineuse échelonnée avec le niveau de l'intensité lumineuse (LI) de l'image autour de la région de l'image optique (9) comme niveau de seuil, et en observant la longueur en direction de déplacement de l'image optique (OI) de l'image de distribution d'intensité lumineuse obtenue.
